# EUROPEAN PATENT APPLICATION

(11) **EP 4 661 506 A1**
(43) Date of publication of application: **10.12.2025**
(21) Application number: 24856601.0
(22) Date of filing: 04.06.2024
(51) Int. Cl.: H04W 48/20, H04W 48/08, H04W 48/16, H04W 8/24, H04W 24/08, H04M 1/72409, H04W 4/80, H04W 88/02, H04B 7/0413

(54) **METHOD AND APPARATUS FOR IMPROVED NETWORK SEARCH IN WIRELESS COMMUNICATION SYSTEM**

(30) Priority: 18.08.2023 KR 20230108440; 21.08.2023 KR 20230108965
(71) Applicant: Samsung Electronics Co., Ltd., Suwon-si, Gyeonggi-do 16677 (KR)
(72) Inventor: HOANG, Minh Duc, Liem Hanoi, 124000 (VN); NGUYEN, Van Hung, Liem Hanoi, 124000 (VN); TRUONG, Van Hau, Liem Hanoi, 124000 (VN); HOANG, Minh Tuan, Liem Hanoi, 124000 (VN); NGUYEN, Duc Doan, Liem Hanoi, 124000 (VN); NGUYEN, The Thoi, Liem Hanoi, 124000 (VN); NGUYEN, Van Thinh, Liem Hanoi, 124000 (VN)
(74) Representative: Nederlandsch Octrooibureau
(86) International application number: PCT/KR2024/007629
(87) International publication number: WO 2025/041985

(57) **Abstract**

An example method performed by a first terminal in a wireless communication system may include identifying a connection state of a second terminal, receiving capability information from the second terminal, if the second terminal is connected with the first terminal using short-range communication, and is not connected with a serving cell of the first terminal over a wireless network, and transmitting a list of at least one candidate cell identified based on the capability information to the second terminal.

## Description

### [Technical Field]

The disclosure relates generally to a wireless communication or a mobile communication system, and, for example, to a method and an apparatus for enhanced network searching of a wearable device in the wireless communication or mobile communication system.

### [Background Art]

To satisfy a wireless data traffic demand which is growing after a 4th generation (4G) communication system is commercialized, efforts are being made to develop an advanced 5th generation (5G) communication system or a pre-5G communication system. For this reason, the 5G communication system or the pre-5G communication system is referred to as a beyond 4G network communication system or a post long term evolution (LTE) system.

To achieve a high data rate, a 5G communication system is implemented in an extremely high frequency (mmWave) band (e.g., such as a 60 gigabyte (60 GHz) band). To mitigate a path loss of propagation and to extend a propagation distance in the extremely high frequency band, the 5G communication system may use beamforming, massive multiple-input multiple-output (MIMO), full dimensional (FD)-MIMO, array antenna, analog beam-forming, and large scale antenna techniques.

Also, for network enhancement of the system, the 5G communication system is developing techniques such as evolved small cell, advanced small cell, cloud radio access network (RAN), ultra-dense network, device to device (D2D) communication, wireless backhaul, moving network, cooperative communication, coordinated multi-points (CoMP), and receive interference cancellation.

Additionally, the 5G system is developing hybrid frequency shift keying and quadrature amplitude modulation (FQAM) and sliding window superposition coding (SWSC) as advanced coding modulation (ACM) schemes, and filter bank multi carrier (FBMC), non orthogonal multiple access (NOMA), and sparse code multiple access (SCMA) as advanced access technologies. As various services may be provided with the development of wireless communication systems as mentioned above, a solution for seamlessly providing the services is desirable.

The 5G system, new radio or next radio (NR) is commercialized to satisfy demands for wireless data traffic, and provides a high data rate service to a user through the 5G system like 4G, and it is also expected that wireless communication services for various purposes such as internet of things (IoT) and a service requiring high reliability for a specific purpose may be provided. Open radio access network (O-RAN) established by operators and equipment providers in a system in which the current 4G communication system and the 5G system are used together defines a new network element (NE) and an interface standard based on the existing 3rd generation partnership project (3GPP) standard, and suggests an O-RAN structure.

With recent development of various wearable devices, the wearable device itself may connect to a wireless network without short-range communication with a host device. However, the wearable device may be subject to several limitations unlike the host devices. Accordingly, new network functions such as reduced capability (RedCap) may be provided to support low-specification devices such as wearable devices. In doing so, ongoing discussion is conducted on network search methods for wireless network connectivity, if the wearable device supporting the new network function such as RedCap is disconnected from the host device.

### [Disclosure of Invention]

### [Technical Problem]

The disclosure may provide an apparatus and a method for an enhanced network search of a wearable device in a wireless communication system (or, a mobile communication system).

For example, the disclosure may provide a neighboring cell list for the wireless network connection, based on capability information previously received by the host device from a remote device (e.g., a wearable device) in the wireless communication system. Hence, the remote device may more quickly discover a network to which the remote device wants to connect based on the neighboring cell list received from the host device.

The disclosure may also provide a host device and a wearable device for performing the enhanced network search in a wireless communication system.

### [Solution to Problem]

According to various embodiments of the disclosure, a method performed by a first terminal in a wireless communication system may include identifying a connection state of a second terminal, receiving capability information from the second terminal, if the second terminal is connected with the first terminal using short-range communication, and is not connected with a serving cell of the first terminal over a wireless network, and transmitting a list of at least one candidate cell identified based on the capability information to the second terminal. The first terminal may be a host device, the second terminal may be a remote device connectable with the at least one candidate cell over the wireless network, and the list may include information of the at least one candidate cell for the wireless network connection of the second terminal, if the short-range communication connection is released.

According to various embodiments of the disclosure, a method performed by a second terminal in a wireless communication system may include transmitting capability information to the first terminal, if the second terminal is connected with a first terminal using short-range communication and is not connected with a serving cell of the first terminal over a wireless network, receiving a list of at least one candidate cell identified based on the capability information from the first terminal, and searching for a serving cell of the second terminal based on the list of the at least one candidate cell, the first terminal may be a host device. The second terminal may be a remote device connectable with the at least one candidate cell over the wireless network, and the list may include information of the at least one candidate cell for the wireless network connection of the second terminal, if the short-range communication connection is released.

According to various embodiments of the disclosure, a first terminal in a wireless communication system may include a transceiver, and at least one processor coupled with the transceiver. The at least one processor may be configured to identify a connection state of a second terminal, receive capability information from the second terminal, if the second terminal is connected with the first terminal using short-range communication, and is not connected with a serving cell of the first terminal over a wireless network, and transmit a list of at least one candidate cell identified based on the capability information to the second terminal. The first terminal may be a host device, the second terminal may be a remote device connectable with the at least one candidate cell over the wireless network, and the list may include information of the at least one candidate cell for the wireless network connection of the second terminal, if the short-range communication connection is released.

According to various embodiments of the disclosure, a second terminal in a wireless communication system may include a transceiver, and at least one processor coupled with the transceiver. The at least one processor may be configured to transmit capability information to the first terminal, if the second terminal is connected with the first terminal using short-range communication and is not connected with a serving cell of the first terminal over a wireless network, receive a list of at least one candidate cell identified based on the capability information from the first terminal, and search for a serving cell of the second terminal based on the list of the at least one candidate cell. The first terminal may be a host device, the second terminal may be a remote device connectable with the at least one candidate cell over the wireless network, and the list may include information of the at least one candidate cell for the wireless network connection of the second terminal, if the short-range communication connection is released.

### [Advantageous Effects of Invention]

An apparatus and a method according to various embodiments of the disclosure may enable a wearable device to connect to a wireless network independently, if a short-range network connection with a host device is released.

An apparatus and a method according to various embodiments of the disclosure, may enable a wearable device connectable to a wireless network to perform faster network search and camp-on based on a neighboring cell list received from a host device. In this case, the neighboring cell list transmitted by the host device may include only information of cells matching capability information of the wearable device, thus supporting the enhanced network search of the wearable device.

Effects obtainable from the disclosure are not limited to the above-mentioned effects, and other effects which are not mentioned may be clearly understood through the following descriptions.

### [Brief Description of Drawings]

The above and other aspects, features, and advantages of certain embodiments of the present disclosure will be more apparent from the following detailed description, taken in conjunction with the accompanying drawings, in which:
FIG. 1 illustrates an example wireless communication system according to various embodiments of the disclosure;
FIG. 2 illustrates a configuration of an example base station in a wireless communication system according to various embodiments of the disclosure;
FIG. 3 illustrates a configuration of an example terminal in a wireless communication system according to various embodiments of the disclosure;
FIG. 4 illustrates a network search method of an example remote device in relation to various embodiments of the disclosure;
FIG. 5 illustrates an example method for generating a neighboring cell list of a host device according to various embodiments of the disclosure;
FIG. 6 illustrates an example method for generating a neighboring cell list of a host device according to various embodiments of the disclosure;
FIG. 7 illustrates example information contained in a neighboring cell list according to various embodiments of the disclosure;
FIG. 8 illustrates an example procedure for transmitting a neighboring cell list of a host device according to various embodiments of the disclosure;
FIG. 9 illustrates an example concept of transmitting a neighboring cell list of a host device according to various embodiments of the disclosure;
FIG. 10 illustrates an example network search procedure of a remote device according to various embodiments of the disclosure;
FIG. 11 illustrates a flowchart of example operations of a host device and a remote device according to various embodiments of the disclosure;
FIG. 12 illustrates an example enhanced network search method according to various embodiments of the disclosure;
FIG. 13 illustrates example operations of a host device according to various embodiments of the disclosure;
FIG. 14 illustrates example operations of a remote device according to various embodiments of the disclosure;
FIG. 15 illustrates example operations of a host device according to various embodiments of the disclosure;
FIG. 16 illustrates an example enhanced network search method according to various embodiments of the disclosure;
FIG. 17 illustrates example operations of a host device according to various embodiments of the disclosure;
FIG. 18 illustrates an example enhanced network search method according to various embodiments of the disclosure;
FIG. 19 illustrates example operations of a host device according to various embodiments of the disclosure;
FIG. 20 illustrates an example enhanced network search method according to various embodiments of the disclosure;
FIG. 21 illustrates an example reduced network search procedure of a remote device according to various embodiments of the disclosure; and
FIG. 22 illustrates example operations of a host device according to various embodiments of the disclosure.

### [Mode for the Invention]

Terms used in the disclosure are used merely to describe specific embodiments, and are not intended to limit the scope of other embodiments. Singular expressions may include plural expressions unless the context clearly indicates otherwise. Terms used herein, including technical or scientific terms, may have the same meaning as those commonly understood by a person of ordinary skill in the technical field described in the disclosure. Among the terms used in the disclosure, terms defined in a general dictionary may be interpreted as having the same or similar meanings as those in the context of the related art, and, unless clearly defined in the disclosure, should not be interpreted as ideal or excessively formal meanings. In various cases, even terms defined in the disclosure may not be interpreted to exclude embodiments of the disclosure.

A hardware-based approach will be described as an example in various embodiments of the disclosure to be described hereafter. However, various embodiments of the disclosure include technology which uses both hardware and software, and accordingly various embodiments of the disclosure do not exclude a software-based approach and/or a combination of hardware-based and a software-based approach.

The disclosure relates to a method and an apparatus for a remote device disconnected from a host device to search for a wireless network in a wireless communication or a mobile communication system. In this case, searching for the wireless network may refer to, for example, discovering (searching, scanning) a suitable cell to receive a communication service. The host device may refer, for example, to a terminal, or a user equipment (UE) which may serve as a host for a remote device. In addition, the remote device may refer, for example, to a wearable device (e.g., a smart watch, smart glasses, a smart ring, a tracking device, or a monitoring device) which may be connected with the host device using short-range communication (e.g., Bluetooth, wireless fidelity (WiFi), or ultra-wide band). The remote device may be a device which includes, for example, a modem (or a subscriber identity module (SIM) card (e.g., an embedded-SIM (eSIM)) for supporting wireless network connectivity (e.g., long term evolution (LTE), LTE-advanced (A), or 5th generation (5G)), as well as the short-range communication with the host device. The types of the host device and the remote device and the short-range communication method between the devices are not limited to the aforementioned examples.

If the short-range communication between the remote device and the host device is released, the remote device may perform cell search to connect to the wireless network. At this time, connection delay and battery waste problems may occur due to the cell search. To address the above problems, specific methods and apparatuses for network search based on a neighboring cell list (e.g., a white list) generated by the host device are described hereafter.

Terms indicating signals (e.g., a message, information, a preamble, a signal, signaling, a sequence, a stream), terms indicating resources (e.g., a symbol, a slot, a subframe, radio a frame, a subcarrier, a resource element (RE), a resource block (RB), a bandwidth part (BWP), occasion), terms indicating operation states (e.g., a step, an operation, a procedure), terms indicating data (e.g., information, a bit, a symbol, a codeword), terms indicating channels, terms indicating control information (e.g., downlink control information (DCI), medium access control (MAC) control element (CE), radio resource control (RRC) signaling), terms indicating network entities, terms indicating components of a device, and so on, as used in the following description for the sake of description. The disclosure is not limited to these terms, and other terms having equivalent technical meanings may be used.

In the following description, a physical channel and a signal may be used interchangeably with data or a control signal. For example, a physical downlink shared channel (PDSCH) is a term referring to a physical channel carrying data, but the PDSCH may also refer to the data. That is, in the disclosure, an expression 'transmitting the physical channel' may be interpreted equivalently to an expression 'transmitting data or a signal over the physical channel' .

Hereinafter, in the disclosure, higher signaling indicates a signal transmission method transmitted from a base station to a terminal using a downlink data channel of a physical layer, or from a terminal to a base station using an uplink data channel of the physical layer. The higher signaling may be understood as RRC signaling or MAC CE.

Also, in the disclosure, to determine whether a specific condition is satisfied or fulfilled, expressions such as greater than or less than are used but these are merely examples, and do not exclude expressions of equal to or greater than or equal to or less than. A condition expressed as 'greater than or equal to' may be replaced by 'greater than', a condition expressed as 'less than or equal to' may be replaced by 'less than', and a condition expressed as 'greater than or equal to and less than' may be replaced by 'greater than and less than or equal to'.

In addition, the disclosure describes various embodiments using terms used in some communication standards (e.g., 3rd generation partnership project (3GPP)), but this is only an example. Various embodiments of the disclosure may be easily modified and applied, in other communication systems.

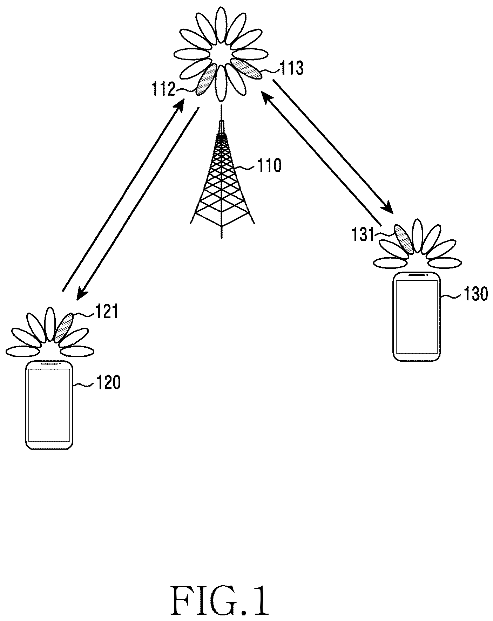

FIG. 1 illustrates an example wireless communication system according to various embodiments of the disclosure. FIG. 1 illustrates a base station 110, a terminal 120, and a terminal 130, as nodes which use radio channels in the wireless communication system. Although FIG. 1 illustrates only one base station, other base station(s) identical or similar to the base station 110 may be further included.

The base station 110 is a network infrastructure which provides radio access to the terminals 120 and 130. The base station 110 has coverage defined as a specific geographic region based on a signal transmission distance. The base station 110 may be referred to as, in addition to a 'base station', an 'access point (AP)', an 'eNodeB (eNB)', a '5G node', a 'next generation nodeB (gNB)', a 'wireless point', a 'transmission/reception point (TRP)', or some other term having a technically identical or similar meaning.

The terminal 120 and the terminal 130 are each a device used by a user, and communicate with the base station 110 over a radio channel. A link from the base station 110 toward the terminal 120 or the terminal 130 is referred to as a downlink (DL), and a link from the terminal 120 or the terminal 130 toward the base station 110 is referred to as an uplink (UL). In addition, the terminal 120 and the terminal 130 may also perform communication over a radio channel, which is not depicted in FIG. 1. In so doing, a device-to-device (D2D) link between the terminal 120 and the terminal 130 is referred to as a sidelink, and the sidelink may be interchangeably used with a PC5 interface. In various cases, at least one of the terminal 120 and the terminal 130 may be operated without user involvement. That is, at least one of the terminal 120 and the terminal 130 may be a device which performs machine type communication (MTC), and may not be carried by the user. The terminal 120 and the terminal 130 each may be referred to as, in addition to a 'terminal', a 'user equipment (UE)', a 'mobile station', a 'subscriber station', a 'remote terminal', a 'wireless terminal', or a 'user device', or other term having technically identical or similar meaning.

The base station 110, the terminal 120, and the terminal 130 may transmit and receive radio signals in a millimeter wave (mmWave) band (e.g., 28 GHz, 30 GHz, 38 GHz, 60 GHz). In so doing, to improve a channel gain, the base station 110, the terminal 120, and the terminal 130 may perform beamforming. Herein, the beamforming may include transmit beamforming and receive beamforming. That is, the base station 110, the terminal 120, and the terminal 130 may give directivity to a transmit signal or a receive signal. For doing so, the base station 110 and the terminals 120 and 130 may select serving beams 112, 113, 121, and 131 through a beam search or beam management procedure. After the serving beams 112, 113, 121, and 131 are selected, communication may be performed through resources which are quasi co-located (QCL) with resources transmitting the serving beams 112, 113, 121, and 131.

If large-scale characteristics of a channel carrying a symbol on a first antenna port may be inferred from a channel carrying a symbol on a second antenna port, the first antenna port and the second antenna port may be estimated to be QCL. For example, the large-scale characteristics may include at least one of delay spread, doppler spread, doppler shift, average gain, average delay, and spatial receiver parameter.

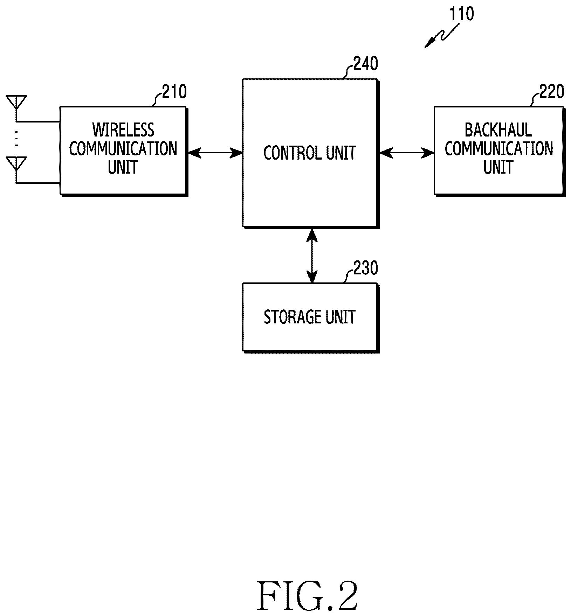

FIG. 2 illustrates a configuration of an example base station in a wireless communication system according to various embodiments of the disclosure. The configuration illustrated in FIG. 2 may be understood as the configuration of the base station 110. A term such as '~ unit' or '~ er' used herein refers to, for example, a unit for processing at least one function or operation, and may be implemented using hardware, software, or a combination of hardware and software. Referring to FIG. 2, the base station 110 includes a wireless communication unit 210, a backhaul communication unit 220, a storage unit 230, and a control unit 240.

The wireless communication unit 210 (including, e.g., wireless communication circuitry) performs functions for transmitting and receiving a signal over a radio channel. For example, the wireless communication unit 210 may perform a conversion function between a baseband signal and a bit string according to a physical layer standard of the system. For example, in data transmission, the wireless communication unit 210 may generate complex symbols by encoding and modulating a transmit bit string. Also, in data reception, the wireless communication unit 210 may restore a receive bit string by demodulating and decoding a baseband signal.

In addition, the wireless communication unit 210 up-converts a baseband signal into a radio frequency (RF) band signal, transmits the up-converted signal via an antenna, and down-converts an RF band signal received via the antenna into a baseband signal. For so doing, the wireless communication unit 210 may include, for example, a transmit filter, a receive filter, an amplifier, a mixer, an oscillator, a digital to analog convertor (DAC), an analog to digital convertor (ADC), and the like. In addition, the wireless communication unit 210 may include a plurality of transmit and receive paths. Further, the wireless communication unit 210 may include at least one antenna array including a plurality of antenna elements.

In terms of the hardware, the wireless communication unit 210 may include a digital unit and an analog unit, and the analog unit may include a plurality of sub-units according to an operating power, an operating frequency, and so on. The digital unit may be implemented with at least one processor including processing circuitry (e.g., a digital signal processor (DSP)).

The wireless communication unit 210 transmits and receives the signal as stated above. Hence, whole or a part of the wireless communication unit 210 may be referred to as 'a transmitter', 'a receiver', or 'a transceiver'. Also, in the following description, the transmission and the reception over the radio channel are used to refer to the above-stated processing of the wireless communication unit 210.

The backhaul communication unit 220 (including, e.g., backhaul communication circuitry) provides an interface for communicating with other nodes in the network. That is, the backhaul communication unit 220 may convert a bit string transmitted from the base station 110 to another node, for example, another access node, another base station, an upper node, or a core network, into a physical signal, and may convert a physical signal received from the other node into a bit string.

The storage unit 230 stores a basic program for operating the base station, an application program, and data such as setting information. The storage unit 230 may include a volatile memory, a non-volatile memory, or a combination of a volatile memory and a non-volatile memory. The storage unit 230 provides the stored data at a request of the control unit 240.

The control unit 240 controls general operations of the base station. For example, the control unit 240 transmits and receives a signal through the wireless communication unit 210 or the backhaul communication unit 220. Also, the control unit 240 records data in and reads data from the storage unit 230. The control unit 240 may execute functions of a protocol stack requested by a communication standard. According to an embodiment, the protocol stack may be included in the wireless communication unit 210. For doing so, the control unit 240 may include at least one processor. The processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. According to various embodiments of the disclosure, the control unit 240 may control the base station to perform operations according to various embodiments to be described.

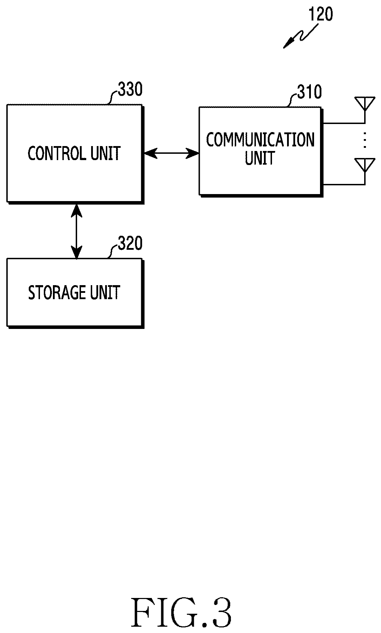

FIG. 3 illustrates a configuration of an example terminal in a wireless communication system according to various embodiments of the disclosure. The configuration illustrated in FIG. 3 may be understood as the configuration of the terminal 120. A term such as 'portion' or '~ er' used hereafter may refer, for example, to a unit for processing at least one function or operation, and may be implemented using hardware, software, or a combination of hardware and software. Referring to FIG. 3, the terminal 120 includes a communication unit 310, a storage unit 320, and a control unit 330.

The communication unit 310 (including, e.g., communication circuitry) performs functions for transmitting and receiving a signal over a radio channel. For example, the communication unit 310 may perform a conversion function between a baseband signal and a bit string according to the physical layer standard of the system. For example, in data transmission, the communication unit 310 may generate complex symbols by encoding and modulating a transmit bit string. Also, in data reception, the communication unit 310 may restore a receive bit string by demodulating and decoding a baseband signal. In addition, the communication unit 310 may up-convert a baseband signal into an RF band signal, transmit the up-converted signal via an antenna, and down-convert an RF band signal received via the antenna into a baseband signal. For example, the communication unit 310 may include a transmit filter, a receive filter, an amplifier, a mixer, an oscillator, a DAC, an ADC, and the like.

Also, the communication unit 310 may include a plurality of transmit and receive paths. Further, the communication unit 310 may include at least one antenna array including a plurality of antenna elements. In terms of the hardware, the communication unit 310 may include a digital circuit and an analog circuit (e.g., an RF integrated circuit (RFIC)). Herein, the digital circuit and the analog circuit may be implemented as a single package. Also, the communication unit 310 may include a plurality of RF chains. Further, the communication unit 310 may perform beamforming.

The communication unit 310 transmits and receives the signals as stated above. Hence, whole or a part of the communication unit 310 may be referred to as 'a transmitter', 'a receiver', or 'a transceiver'. In addition, the transmission and the reception over a radio channel may refer to the above-stated processing of the communication unit 310 in the following description.

The storage unit 320 stores a basic program for operating the terminal, an application program, and data such as setting information. The storage unit 320 may include a volatile memory, a non-volatile memory, or a combination of a volatile memory and a non-volatile memory. The storage unit 320 provides the stored data at a request of the control unit 330.

The control unit 330 controls general operations of the terminal. For example, the control unit 330 transmits and receives a signal through the communication unit 310. Also, the control unit 330 records data in and reads data from the storage unit 320. The control unit 330 may execute functions of the protocol stack required by the communication standard. For doing so, the control unit 330 may include at least one processor or a microprocessor, or may be part of a processor. The processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. In addition, a part of the communication unit 310 and the control unit 330 may be referred to as a communication processor (CP). According to various embodiments, the control unit 330 may control the terminal to perform operations according to various embodiments to be described.

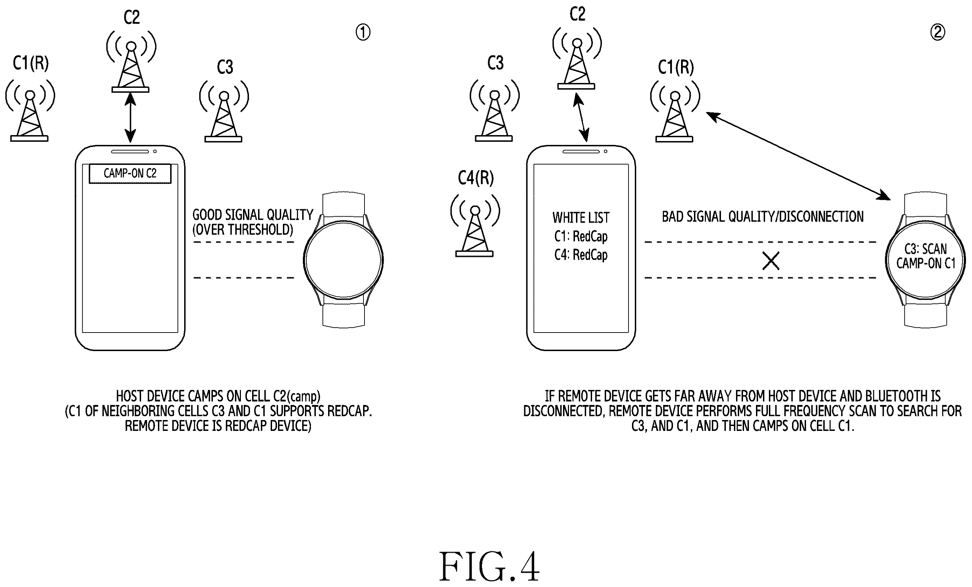

FIG. 4 illustrates an example network search method of a remote device in relation to various embodiments of the disclosure.

Referring to FIG. 4, a case in which a short-range communication connection between a remote device and a host device is released and a wireless network search operation of the remote device is triggered is explained. For example, the host device may be camping on a cell C2. In this case, the remote device may be connected with the host device via Bluetooth. A Bluetooth connection state between the remote device and the host device may be a state of good signal quality transmitted and/or received via Bluetooth (e.g., the signal quality transmitted and/or received is equal to or greater than an arbitrary threshold). The remote device, which is connected with the host device via Bluetooth, may receive the service from the wireless network via the host device and accordingly operate in a remote mode (or a flight mode). For example, the remote device may not use a modem for direct connection with the wireless network. The remote device, if it is connected to the host device via Bluetooth, may remain in the remote mode. Hence, the remote device may save its battery, by not using the modem.

However, if the remote device releases the Bluetooth connection with the host device (or the signal quality becomes equal to or less than an arbitrary threshold), the remote device may search for a wireless network to receive the communication service. For example, the remote device may search for a suitable LTE or 5G cell based on frequencies stored on the remote device by using the modem. However, unlike before the Bluetooth connection is released, if the remote device moves to a new location, frequency information and cell identifier (ID) stored in the remote device may not match frequency information and cell ID of the new location. Accordingly, the remote device may need to perform cell search in every frequency band supported by the remote device at the new location. Thus, problems including battery waste and connection delay may occur.

To address the problems described above, the host device may generate a neighboring cell list (e.g., a white list) including information of cells matching the remote device. In the following example embodiments of the disclosure, the white list may refer, for example, to a neighboring cell list containing the information of the cells matching the remote device. For example, the remote device may be a reduced capability (RedCap) (or new radio (NR)-Light) device. The RedCap device may be connected to a 5G communication system, but may differ in network functionality from a typical 5G terminal. In this case, the RedCap device may be a device designed to satisfy relatively relaxed conditions compared to high requirements (e.g., ultra-reliable, low-latency communication (URLLC), or enhanced URLLC (eURLLC)) of the 5G communication system. More specifically, the RedCap device may be designed for optimization to support 150 mega bit per second (Mbps) and 50 Mbps on the DL and the UL, respectively. For example, the RedCap device may support a narrower bandwidth (e.g., 20 MHz in a sub-7 GHz band or 100 MHz in the mmWave frequency band), a single transmit antenna, a single receive antenna (e.g., two antennas are selectable), a half-duplex frequency division duplex (FDD) selection, low-order modulation (e.g., 256-quadrature amplitude modulation (QAM) is selectable), and lower transmit power. In these embodiments, if the remote device is a RedCap device, it may have at least one of the following features of Table 1.

**[Table 1]**

| Network functions | NR-Light(RedCap device) |
|---|---|
| Bandwidth | 20 MHz (sub-7 GHz) |
| peak data rate DL/UL | 150 /5 0 Mbps or higher |
| Duplexing | HD-FDD, FD-FDD, TDD support |
| Tx/Rx chain | 1 or 2 Tx / 2 RX |
| MIMO layer DL/UL | 1 or 2 / 1 |
| coupling loss | 140dB |

Referring to Table 1 above, the RedCap device may reduce device complexity and a device size, and increase cost effectiveness and battery efficiency of the device. For example, the white list may include information of at least one cell for supporting the RedCap. Hence, if the remote device receives the white list from the host device, the remote device may obtain the cell information supporting the RedCap and thus perform the wireless network search and connection operations more quickly.

For example, the remote device may be RedCap device, and the host device may generate a white list including information of a cell C1 supporting the RedCap and a new RedCap supporting cell C4 among its neighboring cells C3 and C1. If the Bluetooth signal quality between the remote device and the host device is poor or the Bluetooth connection is released, the host device may transmit the white list to the remote device. Instead of performing the cell search on every frequency band supported by the remote device, the remote device may search only for the cell C1 and the cell C4 based on the white list received from the host device. Hence, the remote device may save the time required for the cell search, and reduce the battery waste.

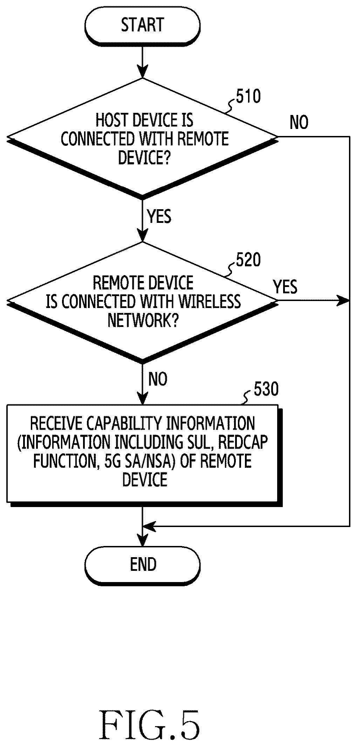

FIG. 5 illustrates an example method for generating a neighboring cell list of a host device according to various embodiments of the disclosure.

Referring to FIG. 5, in operation 510, the host device may identify whether it is connected with the remote device using short-range communication. For example, the host device may identify whether it may communicate with the remote device located in a short range of the host device through the Bluetooth connection.

In operation 520, if the host device is connected to the remote device using the short-range communication, the host device may identify whether the remote device is connected to the wireless network. For example, it may identify whether the remote device is connected to not only the host device using the short-range communication, but also to a base station (e.g., an eNB or a gNB) over the wireless network. The host device may generate and transmit the white list only if the remote device is not connected to the wireless network (e.g., in the flight mode). This is because, if the remote device is connected to the base station over the wireless network, the remote device may not perform the cell search for a new wireless network connection even though the remote device is disconnected from the host device or has poor connection with the host device. Hence, if the remote device is connected to the base station over the wireless network, the host device may not generate the white list, or may not transmit the generated white list to the remote device.

In operation 530, if the remote device is not connected to the base station over the wireless network, the host device may receive wireless cellular capability (or, capability information) of the remote device from the remote device. Hereinafter, the wireless cellular capability of the remote device may be referred to as, for example, capability information of the remote device, in various embodiments of the disclosure. At this time, the capability information may include information of, for example, whether to support at least one network function of supplementary uplink (SUL), RedCap, multiple-input and multiple-output (MIMO), 5G standalone (SA), or 5G non-standalone (NSA).The capability information may further include information of whether to support at least one of a frequency (a frequency band), radio access technology (RAT), a bandwidth, the number of antennas, a modulation order, or the network function defined in the 3GPP.The capability information is not limited to the above examples.

The aforementioned operations of the host device are provided merely by way of example, and some of the above operations may be omitted, and/or one or more of them may be combined. In addition, at least one new operation may be added to the operations described above and combined with the existing operations.

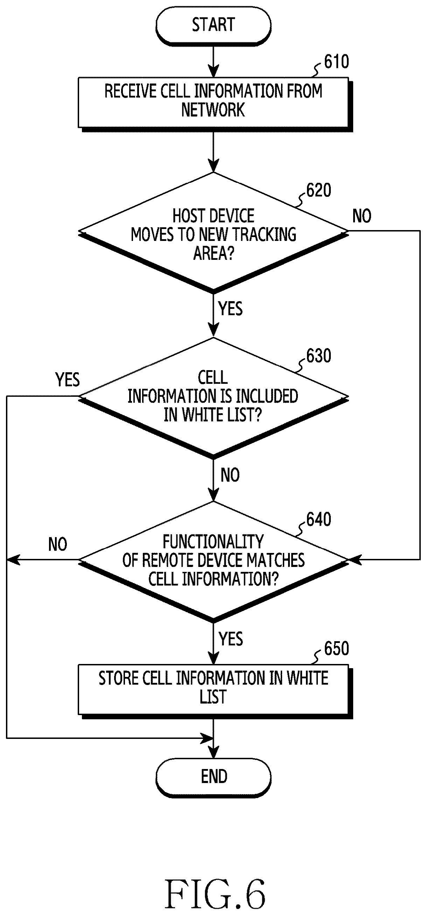

FIG. 6 illustrates an example method for generating a neighboring cell list of a host device according to various embodiments of the disclosure.

Referring to FIG. 6, example operations related to generating and storing a white list of the host device are described. In operation 610, the host device may receive information of at least one neighboring cell of a serving cell of the host device from a network (or a base station). In this case, the information of the at least one neighboring cell may be included in system information (e.g., a system information block (SIB)) or a terminal dedicated message. Hence, the host device may obtain the at least one neighboring cell information by decoding the system information or the terminal dedicated message. The at least one neighboring cell information may include at least one of, for example, the network function supported by each neighboring cell, the supported frequency band, the signal strength, or the cell ID.

In operation 620, the host device may identify whether the host device has moved to a new tracking area. At this time, if the host device moves to a new tracking area, the host device needs to determine whether the at least one neighboring cell is a new neighboring cell not included in the existing white list stored in the host device. However, if the host device does not move to the new tracking area, the host device, which does not need to determine whether the at least one neighboring cell is the new neighboring cell included in the existing white list stored in the host device, may perform operation 640.

In operation 630, if the host device moves to a new tracking area, the host device may identify whether the at least one neighboring cell is a cell included in the existing white list stored in the host device, based on the at least one neighboring cell information received in operation 610. In so doing, if the at least one neighboring cell is the cell included in the existing white list stored in the host device, the host device may not need to generate a new white list. However, operation 620 through operation 630 described above may be performed if the white list is stored in the host device. Accordingly, if the host device stores no white list, the host device may not perform operation 620 through operation 630 mentioned above.

In operation 640, if the at least one neighboring cell is not a cell included in the existing white list stored in the host device, the host device may identify (or evaluate) whether the functionality of the remote device (e.g., the network function supported by the remote device) matches the cell information. For example, based on the capability information received in operation 610, the host device may identify at least one neighboring cell which supports the RedCap if the remote device is a RedCap device. If no neighboring cell supports the RedCap, the host device may terminate the white list generation procedure.

In operation 650, if there is a neighboring cell supporting the function of the remote device, the host device may store information of the at least one neighboring cell supporting the functionality of the remote device in the white list. For example, the host device may store the information of the at least one neighboring cell supporting the RedCap in the white list. That is, the host device may add the information of the newly identified at least one neighboring cell to the stored white list. However, if no white list is stored in the host device, the host device may generate a new white list which includes the information of the at least one neighboring cell supporting the RedCap.

The above operations of the host device are provided merely by way of example, and some of the above-described operations may be omitted, and/or one or more of them may be combined. In addition, at least one new operation may be added in addition to the operations mentioned above and combined with the existing operations.

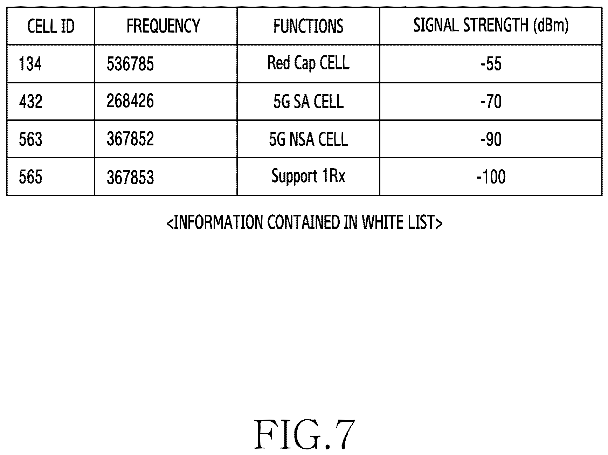

FIG. 7 illustrates example information contained in a neighboring cell list according to various embodiments of the disclosure.

Referring to FIG. 7, a configuration of the white list described in FIG. 6 (e.g., the white list generated or stored in operation 650) is described. For example, the white list may include information of at least one of a cell ID, frequency information, network functions, or a signal strength of at least one neighboring cell which supports the functionality of the remote device. The cell ID may indicate a physical cell ID (e.g., a PCI) of the LTE or 5G network. For example, the at least one neighboring cell information which supports the functionality of the remote device contained in the white list may include information required for the remote device in the cell search to connect to the wireless network after the short-range communication connection with the host device is released. That is, the white list may be a list of candidate cells for connecting to the wireless network if the remote device is disconnected from the host device in the short-range communication. Accordingly, if the short-range communication connection with the host device is released, the remote device may be connected to the wireless network more quickly based on the information contained in the white list. The disclosure is not limited to the above example, and the remote device may, for example, search for a new neighboring cell other than a neighboring cell(s) included in the white list.

Meanwhile, the white list may be modified by the host device. For example, if the host device moves to a new tracking area, the host device may reset (or regenerate) the white list. Alternatively, the host device may add neighboring cell information supporting the functionality of the remote device to the white list, based on the capability information received from the remote device. Alternatively, the host device may remove neighboring cell information not supporting the functionality of the remote device from the white list information, based on the capability information received from the remote device. The above examples are examples in which the host device stores the white list, but the disclosure is not limited thereto. For example, the host device may generate a new white list, depending on the aforementioned situations.

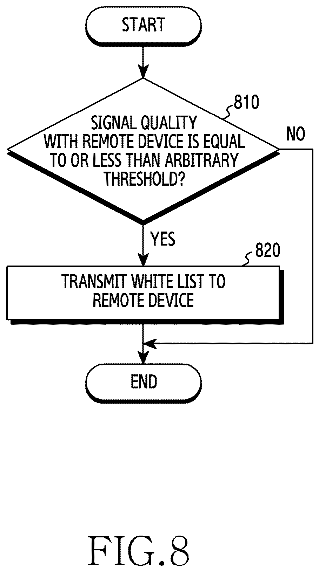

FIG. 8 illustrates an example procedure for transmitting a neighboring cell list of a host device according to various embodiments of the disclosure.

Referring to FIG. 8, an example procedure for transmitting to the remote device the white list generated (or stored) in the procedure of FIG. 6 is described. In operation 810, the host device may identify whether the signal quality with the remote device is equal to or less than an arbitrary threshold (or less than an arbitrary threshold). In this case, the arbitrary threshold for triggering the white list transmission may be preset for the host device by the base station, or may be indicated by the base station. Alternatively, the arbitrary threshold for triggering the white list transmission may be determined by the host device from preset (or stored) values, by considering features of the remote device.

In operation 820, if the signal quality between the host device and the remote device is equal to or less than the arbitrary threshold (or less than the arbitrary threshold), the host device may transmit the white list to the remote device. The method for transmitting the white list based on the arbitrary threshold described above is only an example, and the white list transmission may be triggered by another determination criterion (or criteria). For example, if the host device powers off Bluetooth, the host device may transmit the white list to the remote device.

The above-described operations of the host device are provided merely by way of example, and some of the above operations may be omitted, and/or one or more of them may be combined. In addition, at least one new operation may be added in addition to the operations described above and combined with the existing operations.

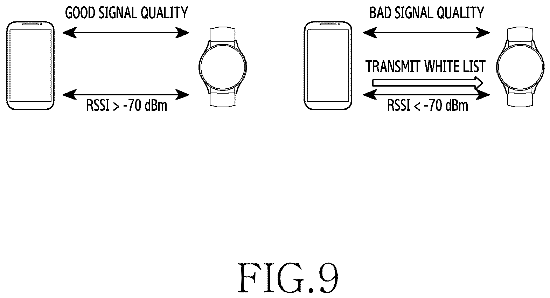

FIG. 9 illustrates an example concept of transmitting a neighboring cell list of a host device according to various embodiments of the disclosure.

Referring to FIG. 9, an example of identifying whether the signal quality between the host device and the remote device is equal to or less than the arbitrary threshold (or less than the arbitrary threshold) in operation 810 of FIG. 8 is described. The threshold of the signal quality for triggering the host device to transmit the stored (or generated) white list to the remote device may be based on a received signal strength (e.g., a received signal strength indicator (RSSI)). For example, if the RSSI value of the received signal via the Bluetooth connection with the remote device is equal to or greater than -70 dBm, the host device may identify good signal quality. In this case, the host device may not transmit the stored (or generated) white list to the remote device. In contrast, if the RSSI value of the received signal via the Bluetooth connection with the remote device is smaller than -70 dBm, the host device may identify poor signal quality. In this case, the host device may transmit the stored (or generated) white list to the remote device.

However, the threshold for triggering the white list transmission is not limited to the above example. In addition, while the above example has described that the host device transmits the white list to the remote device if the RSSI value of the received signal is smaller than -70 dBm, the criterion or criteria are not limited to the RSSI value of the received signal being smaller than the arbitrary threshold. Thus, for example, the white list transmission may be triggered if the RSSI value of the received signal is equal to arbitrary threshold.

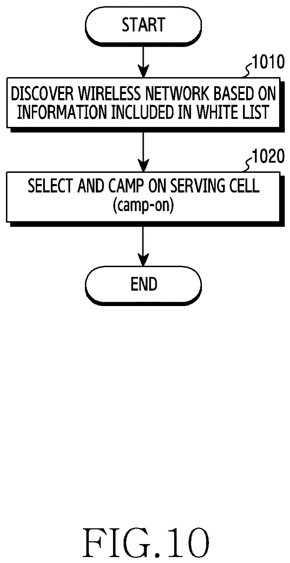

FIG. 10 illustrates an example network search procedure of a remote device according to various embodiments of the disclosure.

Referring to FIG. 10, an example network search method of the remote device is illustrated, if the remote device receives the white list from the host device in operation 820 of FIG. 8. In operation 1010, the remote device may discover a wireless network, based on information included in the white list received from the host device. For example, the white list received from the host device may include the information of at least one of the cell ID, the frequency information, the network function, or the signal strength of at least one neighboring cell supporting the functionality of the remote device. At this time, the remote device which is a RedCap device may receive a synchronization signal block (SSB) including a synchronization signal (SS) (e.g., a synchronization signal) and a physical broadcast channel (PBCH) broadcast from the cell supporting the RedCap in the white list. The SS may include a primary SS (PSS) and a secondary SS (SSS). The remote device may obtain information relating to time/frequency synchronization of the cell supporting the RedCap from the SS. In this case, the remote device may already know the cell ID (e.g., a PCI) of the cell which transmits the SS through the white list. However, if multiple cells support RedCap, the remote device may receive only the SS of a cell having a greater received signal strength based on the received signal strength information of the cells supporting RedCap contained in the white list. Hence, the remote device may not need to discover all SSs broadcast by candidate serving cells in all frequency bands supported by the remote device. Thus, by performing the network search based on the white list, the remote device may reduce the time required to receive the SS of the serving cell, and reduce the battery usage required for the network search.

In operation 1020, the remote device may perform a connection operation (e.g., camp-on) on the cell discovered in operation 1010. At this time, the procedure of the remote device for connecting to the serving cell may be identical or similar to a conventional cell selection procedure. More specifically, the remote device may obtain information contained in a master information block (MIB) by decoding the PBCH of the SSB received in the cell search procedure in operation 1010. Based on the information contained in the MIB, the remote device may identify whether the cell transmitting the SS is a blocked cell. The terminal may receive a physical downlink control channel (PDCCH) based on the information contained in the MIB, and receive an SIB (e.g., SIB 1) over the PDSCH by decoding the PDCCH. Based on the information contained in the SIB, the remote device may identify a public land mobile network (PLMN) of the cell transmitting the SS. If the PLMN ID of the cell transmitting the SS matches a PLMN ID to which the remote device is subscribed, the remote device may select the cell transmitting the SS as its serving cell. The remote device may camp on the selected cell.

The remote device operations described above are provided merely by way of example, and some of the operations described above may be omitted, and/or one or more of them combined. In addition, at least one new operation may be added in addition to the operations described above and combined with the existing operations.

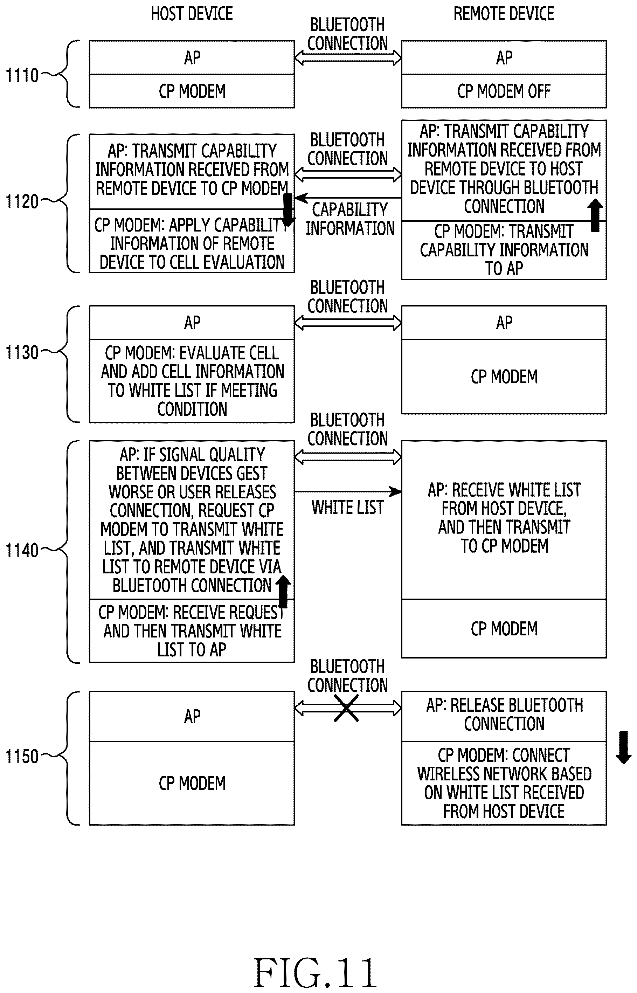

FIG. 11 illustrates a flowchart of example operations of a host device and a remote device according to various embodiments of the disclosure.

Referring to FIG. 11, the host device and the remote device may include both an application processor (AP) and a CP, and detailed operation sequences of the AP and the CP for performing the operations according to the embodiments mentioned above are described. In operation 1110, if the host device and the remote device are connected using Bluetooth (e.g., if the signal quality of the Bluetooth connection is good), the remote device may remain in the flight mode and accordingly the CP modem may be turned off. Hence, the remote device may not be connected to the base station over the wireless network via the CP modem.

In operation 1120, the CP modem of the remote device may transmit the capability information of the remote device to the AP of the remote device. The AP of the remote device may transmit the capability information received from the CP modem of the remote device to the AP of the host device via the Bluetooth connection. In this case, the capability information transmitted to the host device may indicate the capability information explained in operation 530. The AP of the host device may transmit the capability information received from the remote device to the CP modem of the host device. The CP modem of the host device may perform cell evaluation based on the capability information of the remote device received from the AP of the host device. In so doing, the cell evaluation may refer to, for example, an operation (e.g., operation 640) of identifying whether the neighboring cells support the functionality of the remote device based on the cell information received from the network and the capability information.

In operation 1130, the CP modem of the host device may add information of a cell satisfying the condition (e.g., whether the cell supports the RedCap) through the cell evaluation to the white list. Alternatively, if no white list is stored, the host device may generate a white list including the cell information which satisfies the condition.

In operation 1140, the AP of the host device may request the CP modem of the host device to transmit the white list, if the signal quality with the remote device deteriorates or the Bluetooth connection is released (e.g., if the user of the host device releases the Bluetooth connection). The CP modem of the host device may transmit the stored (or generated) white list to the AP of the host device in response to the white list transmission request received from the AP of the host device. The AP of the host device may transmit the white list received from the CP modem of the host device to the AP of the remote device. In this case, if the user of the host device releases the Bluetooth connection, the white list may be transmitted before the Bluetooth connection release. The AP of the remote device may transmit the white list received from the AP of the host device to the CP modem of the remote device.

In operation 1150, the AP of the remote device may release the Bluetooth connection with the host device. If the Bluetooth connection is released, the CP modem of the remote device may perform a wireless network connection based on the white list received from the host device. In so doing, the wireless network connection procedure may include, for example, the cell search and camp-on procedures described in operation 1010 through operation 1020.

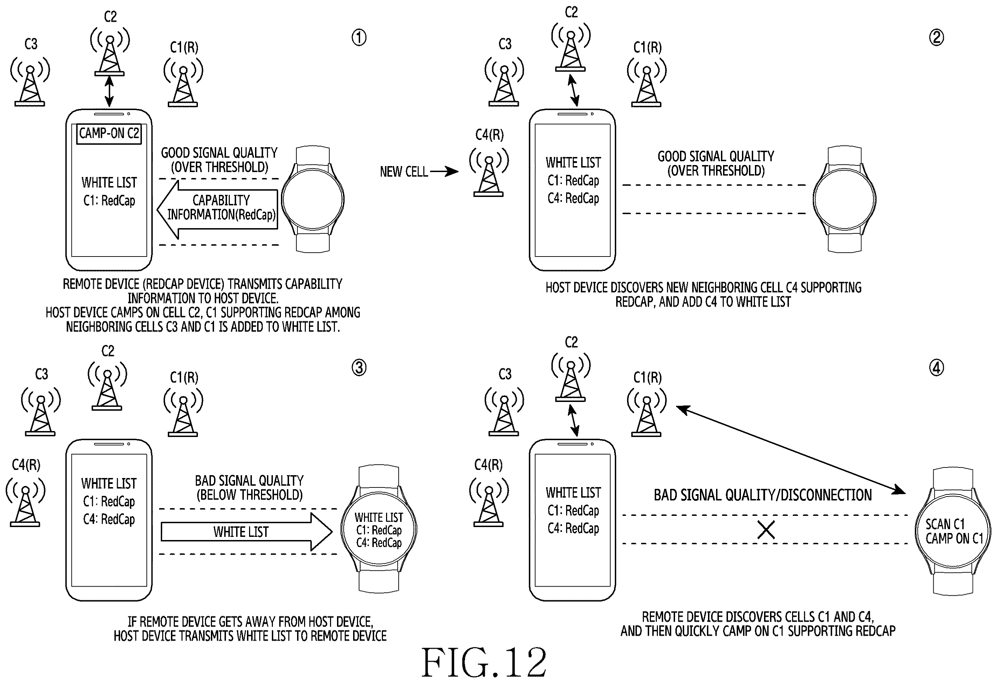

FIG. 12 illustrates an example enhanced network search method according to various embodiments of the disclosure.

Referring to FIG. 12, an embodiment of an example process in which the remote device receives a white list from the host device based on capability information of the remote device, and discovers and connects to a wireless network based on information contained in the white list, is described.

In an embodiment, as a first step, if the host device is connected to the remote device which is a RedCap device using short-range communication, the host device connected to a cell C2 may identify whether the remote device is connected to a wireless network. For example, the host device may identify whether the remote device is connected not only with the host device using short-range communication, but also with a base station (e.g., an eNB or a gNB) over the wireless network. The host device may receive from the network (or the base station) information of at least one neighboring cell of the serving cell of the host device. If the remote device is not connected to the base station over the wireless network, and the signal quality of the Bluetooth connection is equal to or greater than an arbitrary threshold, the host device may receive the capability information of the remote device from the remote device. The received signal quality being equal to or greater than an arbitrary threshold is provided as an example for determining the signal quality of the Bluetooth connection, but this is only an example and, in an embodiment, a received signal strength greater than the arbitrary threshold may be used for the determining. The capability information may include, for example, information of whether to support at least one network function of the SUL, the RedCap, the MIMO, the 5G SA, or the 5G NSA. The capability information may further include information of whether to support at least one of the frequency (the frequency band), the RAT, the bandwidth, the number of antennas, the modulation order, or the network function defined by 3GPP. The capability information is not limited to the above examples. Based on the capability information received from the remote device, the host device may add information of the cell C1 supporting the RedCap among the neighboring cells C3 and C1 to the white list. In doing so, if there is no existing white list stored, the host device may generate a white list including the cell C1 information.

As a second step, the host device may discover a new neighboring cell C4 which supports RedCap. The host device may add information of the cell C4 to the white list. Hence, the white list stored in the host device may include the information of the cells C1 and C4 supporting the RedCap.

As a third step, the host device may transmit the stored white list to the remote device, if the signal quality of the Bluetooth connection with the remote device becomes poor (e.g., if the received signal strength is equal to or less than the arbitrary threshold). The received signal strength being equal to or less than the arbitrary threshold is provided as an example for determining the signal quality of the Bluetooth connection, but this is only an example and, in an embodiment, the received signal strength being less than the arbitrary threshold may be used for the determining. The arbitrary threshold for triggering the white list transmission may be preset by the base station for the host device, or may be indicated by the base station. In an embodiment, the arbitrary threshold for triggering the white list transmission may be determined by the host device from preset (or stored) values, by considering the features of the remote device. The method of transmitting the white list based on the arbitrary threshold described above is merely an example, and the white list transmission may be triggered by another determination criterion (or criteria). For example, if the host device powers off Bluetooth, the host device may transmit the white list to the remote device.

As a fourth step, if the signal quality of the Bluetooth connection between the host device and the remote device is poor or the Bluetooth connection is released, the remote device may discover a wireless network based on the information contained in the white list received from the host device. For example, the white list received from the host device may include at least one information of the cell ID, the frequency information, the network function, or the signal strength of at least one neighboring cell which supports the functionality of the remote device. At this time, the remote device which is a RedCap device may receive an SSB including an SS and a PBCH broadcast from the cell which supports RedCap in the white list. The remote device may obtain information of the time/frequency synchronization of the RedCap-supporting cell from the SS. In so doing, the remote device may already know the cell ID (e.g., a PCI) of the cell transmitting the SS through the white list. However, if one or more cells support the RedCap (e.g., if the cells C1 and C4 both support the RedCap), the remote device may receive only the SS of the cell having a greater received signal strength (e.g., the cell C1 at a closer distance) based on the received signal strength information of the cells C1 and C4 supporting RedCap in the information contained the white list. Thus, the remote device may not need to search all SSs broadcast by candidate serving cells in all frequency bands supported by the remote device. The remote device may perform the connection operation (e.g., camp-on) for the cell C1. The remote device may decode the PBCH of the SSB received from the cell C1 and thus obtain information contained in the MIB. The remote device may identify whether the cell C1 is a blocked cell based on the information contained in the MIB. The terminal may receive a PDCCH based on the information contained in the MIB, and receive an SIB (e.g., an SIB 1) over the PDSCH by decoding the PDCCH. The remote device may identify a PLMN of the cell C1 based on the information contained in the SIB. If the PLMN ID of the cell C1 matches an PLMN ID to which the remote device is subscribed, the remote device may select cell C1 as its serving cell. The remote device may quickly camp on the cell C1.

The above-described operations of the host device and the remote device are provided merely by way of example, and some of the above-described operations may be omitted, and/or one or more of them combined. In addition, at least one new operation may be added in addition to the operations described above and combined with the existing operations. Further, the above operations of the host device and the remote device may further include or omit at least some of the operations explained in FIG. 5 through FIG. 12.

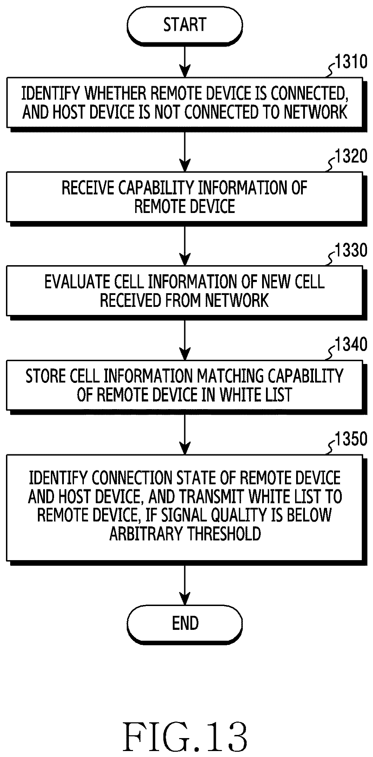

FIG. 13 illustrates example operations of a host device according to various embodiments of the disclosure.

Referring to FIG. 13, an embodiment of the host device for an example enhanced network search method based on a white list is described according to the above embodiments.

In operation 1310, the host device may identify whether it is connected to the remote device using short-range communication. For example, the host device may identify whether it can communicate with the remote device located at a close distance of the host device through the Bluetooth connection. If the host device is connected to the remote device using short-range communication, the host device may identify whether the remote device is connected to a wireless network. For example, the host device may identify whether the remote device is connected not only with the host device using short-range communication, but also with the base station (e.g., an eNB or a gNB) over a wireless network. The host device may generate and transmit the white list, for example, only if the remote device is not connected to the wireless network (e.g., in the flight mode). If the remote device is connected to the base station over the wireless network, the host device may not generate a white list or transmit the generated white list to the remote device.

In operation 1320, if the remote device is not connected to the base station over the wireless network, the host device may receive capability information of the remote device from the remote device. The capability information may include, for example, information of whether to support at least one network function of the SUL, the RedCap, the MIMO, the 5G SA, or the 5G NSA. The capability information may further include information of whether to support at least one of the frequency (the frequency band), the RAT, the bandwidth, the number of antennas, the modulation order, or the network function defined by 3GPP. The capability information is not limited to the above examples.

In operation 1330, if at least one neighboring cell of the serving cell of the host device is not a cell included in the existing white list stored in the host device, the host device may identify (or evaluate) whether the functionality of the remote device (e.g., the network function supported by the remote device) matches the cell information. For example, based on the capability information received in operation 1320, the host device may identify at least one neighboring cell which supports RedCap if the remote device is a RedCap device. The at least one neighboring cell information may be received from the network (or the base station), and the at least one neighboring cell information may be contained in system information (e.g., an SIB) or a terminal dedicated message. Hence, the host device may decode the system information or the terminal dedicated message and thus obtain the at least one neighboring cell information. The at least one neighboring cell information may include at least one of a network function supported by each neighboring cell, a supported frequency band, a signal strength, or a cell ID.

In operation 1340, if there is a neighboring cell supporting the functionality of the remote device, the host device may store the at least one neighboring cell information supporting the functionality of the remote device in the white list. For example, the host device may store the information of the at least one neighboring cell supporting RedCap in the white list. That is, the host device may add the information of the at least one neighboring cell newly identified into the stored white list. However, if no white list is stored in the host device, the host device may generate a new white list which includes at least one neighboring cell information supporting the RedCap.

In operation 1350, the host device may identify whether the signal quality with the remote device is equal to or less than an arbitrary threshold (or less than the arbitrary threshold). In this case, the arbitrary threshold for triggering the white list transmission may be preset for the host device by the base station, or may be indicated by the base station. In an embodiment, the arbitrary threshold for triggering the white list transmission may be determined by the host device among the preset (or stored) values, by considering the features of the remote device. If the signal quality between the host device and the remote device is equal to or less than the arbitrary threshold (or less than the arbitrary threshold), the host device may transmit the white list to the remote device. The method for transmitting the white list based on the arbitrary threshold described above is only an example, and the white list transmission may be triggered by another determination criterion. For example, if the host device powers off Bluetooth, the host device may transmit the white list to the remote device.

The remote device operations mentioned above are provided merely by way of example, and some of the above operations may be omitted, and/or one or more of them combined. In addition, at least one new operation may be added in addition to the operations described above and combined with the existing operations. Further, the operations of the host device described above may further include or omit at least some of the operations explained in FIG. 5 through FIG. 12.

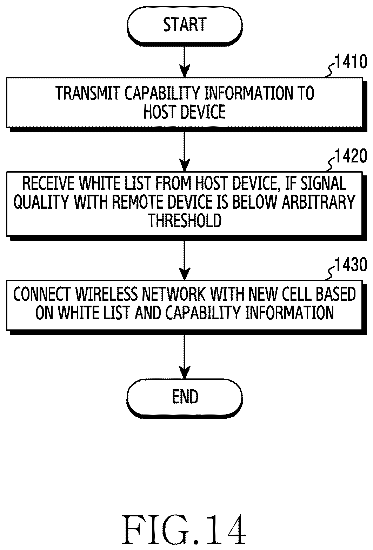

FIG. 14 illustrates example operations of a remote device according to various embodiments of the disclosure.

Referring to FIG. 14, in operation 1410, if the remote device is connected to the host device using short-range communication and is not connected with a base station over a wireless network, the remote device may transmit capability information of the remote device to the host device. The capability information may include, for example, information of whether to support at least one network function of the SUL, RedCap, MIMO, 5G SA, or 5G NSA. In addition, the capability information may further include the information of whether to support at least one of the frequency (the frequency band), the RAT, the bandwidth, the number of antennas, the modulation order, or the network function defined by 3GPP.The capability information is not limited to the above examples.

In operation 1420, if the signal quality between the host device and the remote device is equal to or less than the arbitrary threshold (or the less than the arbitrary threshold), the remote device may receive a white list from the host device. The method for receiving the white list based on an arbitrary threshold described above is only an example, and the white list may be received based on another determination criterion. For example, if the host device powers off Bluetooth, the remote device may receive the white list from the host device. In this case, the white list received from the host device may include information of at least one neighboring cell which supports the functionality of the remote device.

In operation 1430, the remote device may discover a wireless network, based on the information contained in the white list received from the host device. For example, the white list received from the host device may include information of, for example, at least one of a cell ID, frequency information, network function, or a signal strength of at least one neighboring cell which supports the functionality of the remote device. At this time, a remote device which is a RedCap device may receive an SSB including an SS and a PBCH broadcast from a cell which supports RedCap in the white list. The remote device may obtain time/frequency synchronization information of the cell supporting the RedCap from the SS. In this case, the remote device may already know the cell ID (e.g., a PCI) of the cell which transmits the SS through the white list. However, if one or more cells support RedCap, the remote device may receive only the SS of the cell having a greater received signal strength based on the received signal strength information of the cells supporting RedCap contained in the white list. The remote device may perform the connection operation (e.g., camp-on) on the discovered cell. In so doing, the procedure of the remote device for connecting to the serving cell may be identical or similar to a conventional cell selection procedure. More specifically, the remote device may obtain information contained in an MIB by decoding the PBCH of the SSB received in the cell search procedure. Based on the information contained in the MIB, the remote device may identify whether the cell transmitting the SS is a blocked cell. The terminal may receive the PDCCH based on the information contained in the MIB, and receive an SIB (e.g., an SIB 1) over the PDSCH by decoding the PDCCH. The remote device may identify a PLMN of the cell transmitting the SS based on the information contained in the SIB. If the PLMN ID of the cell transmitting the SS matches a PLMN ID to which the remote device is subscribed, the remote device may select the cell transmitting the SS as its serving cell. The remote device may camp on the selected cell.

The above-described remote device operations are provided merely by way of example, and some of the above-described operations may be omitted, and/or one or more of them may be combined. In addition, at least one new operation may be added in addition to the operations described above and combined with the existing operations. Further, the remote device operations described above may further include or omit at least some of the operations described in FIG. 5 through FIG. 12.

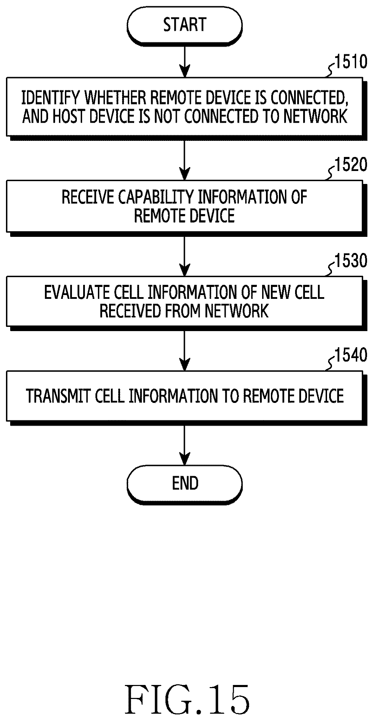

FIG. 15 illustrates example operations of a host device according to various embodiments of the disclosure.

Referring to FIG. 15, an embodiment of the host device for an example enhanced network search method is now described.

In operation 1510, the host device may identify whether it is connected to the remote device using short-range communication. For example, the host device may identify whether it can communicate with the remote device located at a close distance of the host device via the Bluetooth connection. If the host device is connected with the remote device using short-range communication, the host device may identify whether the remote device is connected to a wireless network. For example, the host device may identify whether the remote device is connected not only with the host device using short-range communication, but also with a base station (e.g., an eNB or a gNB) over a wireless network. The host device may transmit neighboring cell information to the remote device, for example, only if the remote device is not connected to the wireless network (e.g., in the flight mode). If the remote device is connected with a base station over a wireless network, the host device may not transmit the neighboring cell information to the remote device.

In operation 1520, if the remote device is not connected with a base station over a wireless network, the host device may receive capability information of the remote device from the remote device. The capability information may include, for example, information of whether to support at least one network function of the SUL, the RedCap, the MIMO, the 5G SA, or the 5G NSA. The capability information may further include information of whether to support at least one of the frequency (the frequency band), the RAT, the bandwidth, the number of antennas, the modulation order, or the network function defined by 3GPP. The capability information is not limited to the above examples.

In operation 1530, the host device may identify (or evaluate) whether the functionality of the remote device (e.g., the network function supported by the remote device) matches the cell information. For example, based on the capability information received in operation 1520, the host device may identify at least one neighboring cell which supports RedCap if the remote device is a RedCap device. The at least one neighboring cell information may be received from the network (or the base station), and the at least one neighboring cell information may be contained in system information (e.g., an SIB) or a terminal dedicated message. Hence, the host device may decode the system information or the terminal dedicated message and thus obtain the at least one neighboring cell information. The at least one neighboring cell information may include, for example, at least one of a network function supported by each neighboring cell, a supported frequency band, a signal strength, or a cell ID.

In operation 1540, if there is a neighboring cell which supports the functionality of the remote device, the host device may transmit information of the at least one neighboring cell which supports the functionality of the remote device to the remote device. For example, the host device may immediately transmit the information of the at least one neighboring cell which supports RedCap to the remote device, without storing it in the white list. Hence, the host device may not need to generate and maintain a separate white list.

The above remote device operations are provided merely by way of example, and some of the above-described operations may be omitted, and/or one or more of them may be combined. In addition, at least one new operation may be added in addition to the operations described above and combined with the existing operations. Further, the remote device operations mentioned above may further include or omit at least some of the operations explained in FIG. 5 through FIG. 12.

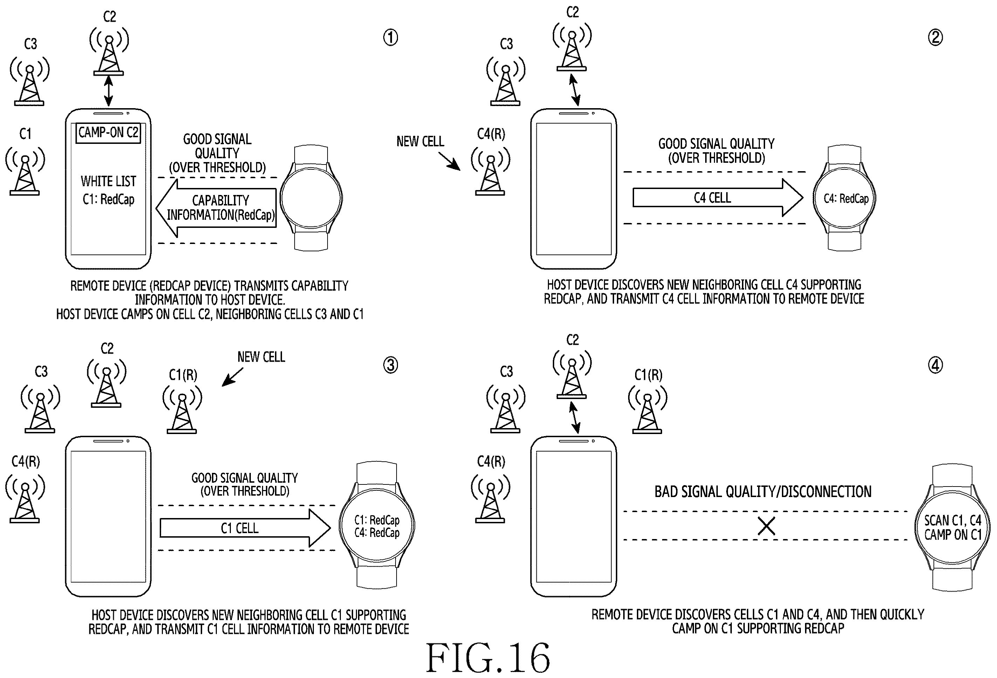

FIG. 16 illustrates an example enhanced network search method according to various embodiments of the disclosure.

Referring to FIG. 16, an embodiment of an example process in which the remote device receives from the host device the neighboring cell information evaluated based on the capability information of the remote device, and discovers and connects to the wireless network based on the neighboring cell information is described, according to the example operations of the host device of FIG. 15 described above.

In an embodiment, as a first step, if the host device is connected to the remote device which is a RedCap device using short-range communication, the host device connected to the cell C2 may identify whether the remote device is connected with the wireless network. For example, the host device may identify whether the remote device is connected not only with the host device using short-range communication, but also with a base station (e.g., an eNB or a gNB) over a wireless network. The host device may receive from the network (or the base station) information of at least one neighboring cell of the serving cell of the host device. If the remote device is not connected with a base station over a wireless network and the signal quality of the Bluetooth connection is equal to or greater than the arbitrary threshold, the host device may receive the capability information of the remote device from the remote device. The received signal quality being equal to or greater than an arbitrary threshold is provided as an example for determining the signal quality of the Bluetooth connection, but this is only an example and, in an embodiment, the received signal strength being greater than the arbitrary threshold may be used for the determining. The capability information may include, for example, the information of whether to support at least one network function of the SUL, the RedCap, the MIMO, the 5G SA, or the 5G NSA. The capability information may further include the information of whether to support at least one of the frequency (the frequency band), the RAT, the bandwidth, the number of antennas, the modulation order, or the network function defined by 3GPP. The capability information is not limited to the above examples.

As a second step, the host device may discover a new neighboring cell C4 which supports RedCap. The host device may transmit information of the cell C4 to the remote device.

As a third step, the host device may discover a new neighboring cell C1 which supports RedCap. The host device may transmit information of the cell C1 to the remote device.

As a fourth step, if the signal quality of the Bluetooth connection between the host device and the remote device is poor or the Bluetooth connection is released, the remote device may discover a wireless network, based on the information of the neighboring cells C1 and C4 supporting RedCap received from the host device. For example, the information received from the host device may include, for example, at least one information of the cell ID, the frequency information, the network function, or the signal strength of the cells C1 and C4 which support the RedCap function. At this time, the remote device which is the RedCap device may receive SSBs including SSs and PBCHs broadcast from the cells C1 and C4 which support RedCap in the white list. The remote device may obtain time/frequency synchronization information of the cells C1 and C4 supporting RedCap from the SS. However, since one or more cells support RedCap, the remote device may receive only the SS of the cell with the greater received signal strength (e.g., the cell C1 at a closer distance) based on the received signal strength information of the cells C1 and C4 supporting the RedCap. Thus, the remote device may not need to search for all SSs broadcast by the candidate serving cells in all frequency bands supported by the remote device. The remote device may perform the connection operation (e.g., camp-on) on the cell C1. The remote device may decode the PBCH of the SSB received from the cell C1 and thus obtain the information contained in the MIB. The remote device may identify whether the cell C1 is a blocked cell based on the information contained in the MIB. The terminal may receive the PDCCH based on the information contained in the MIB, and receive an SIB (e.g., an SIB 1) over the PDSCH, by decoding the PDCCH. The remote device may identify the PLMN of the cell C1 based on the information contained in the SIB. If the PLMN ID of the cell C1 matches the PLMN ID to which the remote device is subscribed, the remote device may select cell C1 as its serving cell. The remote device may quickly camp on the cell C1.

The above operations of the host device and the remote device are provided merely by way of example, and some of the above-described operations may be omitted, and/or one or more of them may be combined. In addition, at least one new operation may be added in addition to the operations described above and combined with the existing operations. Further, the operations of the host device and the remote device mentioned above may further include or omit at least some of the operations explained in FIG. 5 through FIG. 12.

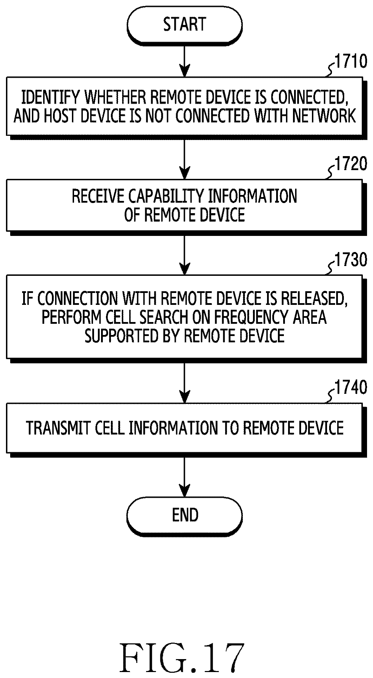

FIG. 17 illustrates example operations of a host device according to various embodiments of the disclosure.

Referring to FIG. 17, an embodiment of the host device for an example enhanced network search method shall be described.

In operation 1710, the host device may identify whether it is connected with the remote device using short-range communication. For example, the host device may identify whether it may communicate with the remote device located at a close distance of the host device via a Bluetooth connection. If the host device is connected with the remote device using short-range communication, the host device may identify whether the remote device is connected with a wireless network. For example, the host device may identify whether the remote device is connected not only with the host device using short-range communication, but also with a base station (e.g., an eNB or a gNB) over a wireless network. The host device may transmit neighboring cell information, for example, only if the remote device is not connected to the wireless network (e.g., in the flight mode). If the remote device is connected with a base station over a wireless network, the host device may not transmit neighboring cell information to the remote device.

In operation 1720, if the remote device is not connected with a base station over a wireless network, the host device may receive capability information of the remote device from the remote device. The capability information may include, for example, information of whether to support at least one network function of the SUL, the RedCap, the MIMO, the 5G SA, or the 5G NSA. The capability information may further include information of whether to support at least one of the frequency (the frequency band), the RAT, the bandwidth, the number of antennas, the modulation order, or the network function defined by 3GPP. The capability information is not limited to the above examples.

In operation 1730, if the user of the host device releases the Bluetooth connection between the host device and the remote device (e.g., turns off the Bluetooth), the host device may discover at least one neighboring cell of the serving cell of the host device from the network (or the base station). For example, before the Bluetooth connection with the remote device is released, the host device may discover at least one neighboring cell in a frequency band supported by the remote device. Hence, the host device may not need to receive in advance the at least one neighboring cell information from the network (or the base station). In this case, the at least one neighboring cell information may be included in system information (e.g., SIB) or a terminal dedicated message. Accordingly, the host device may obtain the at least one neighboring cell information by decoding the system information or the terminal dedicated message. The at least one neighboring cell information may include, for example, at least one of a network function supported by each neighboring cell, a supported frequency band, a signal strength, or a cell ID.

In operation 1740, the host device may transmit the at least one neighboring cell information to the remote device, before the Bluetooth connection with the remote device is released. The at least one neighboring cell information may include, for example, cell information supporting RedCap.

The above host device operations are provided merely by way of example, and some of the above-described operations may be omitted and/or one or more of them may be combined. In addition, at least one new operation may be added in addition to the operations described above and combined with the existing operations. Further, the host device operations mentioned above may further include or omit at least some of the operations explained in FIG. 5 through FIG. 12.

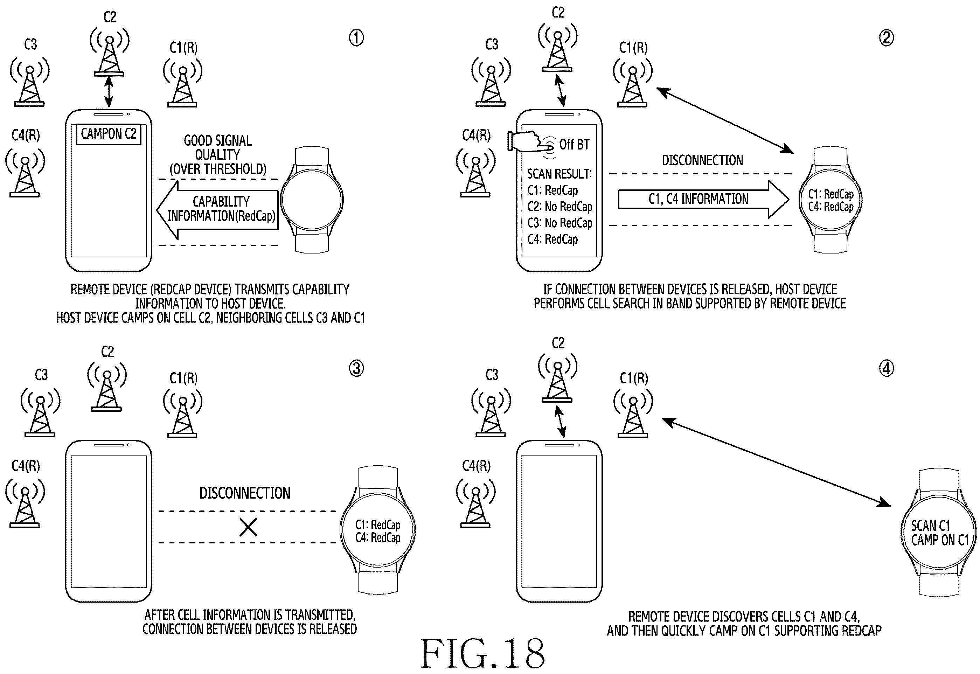

FIG. 18 illustrates an example enhanced network search method according to various embodiments of the disclosure.

Referring to FIG. 18, an embodiment of an example process in which the remote device receives the neighboring cell information from the host device, and discovers and connects to the wireless network based on the neighboring cell information may be described, according to the example operations of the host device of FIG. 17 explained earlier.

In an embodiment, as a first step, if the host device is connected with the remote device which is a RedCap device using short-range communication, the host device connected to the cell C2 may identify whether the remote device is connected with a wireless network. For example, the host device may identify whether the remote device is connected not only with the host device using short-range communication, but also with a base station (e.g., an eNB or a gNB) over a wireless network. If the remote device is not connected with a base station over a wireless network, and the signal quality of the Bluetooth connection is equal to or greater than the arbitrary threshold, the host device may receive capability information of the remote device from the remote device. The received signal quality being equal to or greater than the arbitrary threshold is provided as an example for determining the signal quality of the Bluetooth connection, but this is only an example and, in an embodiment, the received signal strength being greater than the arbitrary threshold may be used for the determining. The capability information may include, for example, information of whether to support at least one network function of the SUL, the RedCap, the MIMO, the 5G SA, or the 5G NSA. The capability information may further include the information of whether to support at least one of the frequency (the frequency band), the RAT, the bandwidth, the number of antennas, the modulation order, or the network function defined by 3GPP. The capability information is not limited to the above examples.

As a second step, if the user of the host device releases the Bluetooth connection between the host device and the remote device (e.g., turns off the Bluetooth), the host device may discover at least one neighboring cell of the serving cell of the host device from the network (or, the base station). Hence, the host device may not receive and store the information of the neighboring cells from the network in advance. The host device may receive information of the at least one neighboring cell of the serving cell of the host device from the network (or the base station). In so doing, the host device may evaluate the at least one neighboring cell based on the capability information received from the remote device. The host device may transmit information of the neighboring cells C1 and C4 which support RedCap to the remote device.

As a third step, the host device may transmit to the remote device the information of the new neighboring cells C1 and C4 which support RedCap, and then release the Bluetooth connection with the remote device.

As a fourth step, if the signal quality of the Bluetooth connection between the host device and the remote device is poor or the Bluetooth connection is released, the remote device may discover a wireless network based on the neighboring cell C1 and C4 information supporting RedCap received from the host device. For example, the information received from the host device may include at least one information of the cell ID, the frequency information, the network function, or the signal strength of the cells C1 and C4 which support RedCap. At this time, the remote device which is a RedCap device may receive the SSBs including the SSs and the PBCHs broadcast from the cells C1 and C4 which support the RedCap. The remote device may obtain the time/frequency synchronization information of the RedCap-supporting cells C1 and C4 from the SS. However, since one or more cells support RedCap, the remote device may receive only the SS of the cell with the greater received signal strength (e.g., the cell C1 at a closer distance) based on the received signal strength information of the cells C1 and C4 supporting RedCap. Thus, the remote device may not need to search for all the SSs broadcast by the candidate serving cells in all frequency bands supported by the remote device. The remote device may perform the connection operation (e.g., camp-on) on the cell C1. The remote device may decode the PBCH of the SSB received from the cell C1 and thus obtain the information contained in the MIB. The remote device may identify whether the cell C1 is a blocked cell based on the information contained in the MIB. The terminal may receive the PDCCH based on the information contained in the MIB, and receive an SIB (e.g., an SIB 1) over the PDSCH, by decoding the PDCCH. The remote device may identify the PLMN of the cell C1 based on the information contained in the SIB. If the PLMN ID of the cell C1 matches the PLMN ID to which the remote device is subscribed, the remote device may select cell C1 as its serving cell. The remote device may quickly camp on the cell C1.

The above operations of the host device and the remote device are provided merely by way of example, and some of the above-described operations may be omitted and/or one or more of them may be combined. In addition, at least one new operation may be added in addition to the operations described above and combined with the existing operations. Further, the operations of the host device and the remote device described above may further include or omit at least some of the operations explained in FIG. 5 through FIG. 12.

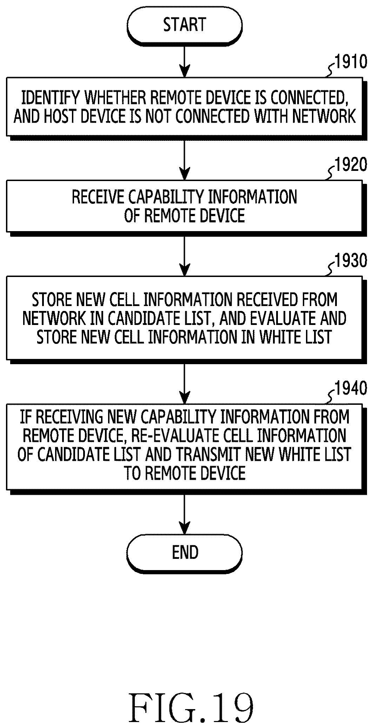

FIG. 19 illustrates example operations of a host device according to various embodiments of the disclosure.

Referring to FIG. 19, an embodiment of the host device for an example enhanced network search method is now described.

In operation 1910, the host device may identify whether it is connected with the remote device using short-range communication. For example, the host device may identify whether it may communicate with the remote device located at a close distance of the host device via a Bluetooth connection. If the host device is connected with the remote device using short-range communication, the host device may identify whether the remote device is connected with a wireless network. For example, the host device may identify whether the remote device is connected not only with the host device using short-range communication, but also with a base station (e.g., an eNB or a gNB) over a wireless network. The host device may transmit neighboring cell information, for example, only if the remote device is not connected to a wireless network (e.g., in the flight mode). If the remote device is connected with a base station over a wireless network, the host device may not transmit the neighboring cell information to the remote device.

In operation 1920, if the remote device is not connected with a base station over a wireless network, the host device may receive capability information of the remote device from the remote device. The capability information may include, for example, the information of whether to support at least one network function of the SUL, the RedCap, the MIMO, the 5G SA, or the 5G NSA. The capability information may further include the information of whether to support at least one of the frequency (the frequency band), the RAT, the bandwidth, the number of antennas, the modulation order, or the network function defined by 3GPP. The capability information is not limited to the above examples.

In operation 1930, the host device may receive information of at least one neighboring cell from the network (or the base station). The host device may store the received information of the at least one neighboring cell in a candidate list. In so doing, the at least one neighboring cell information may be contained in system information (e.g., SIB) or a terminal dedicated message. Hence, the host device may decode the system information or the terminal dedicated message and thus obtain the at least one neighboring cell information. The at least one neighboring cell information may include at least one of the network functions supported by each neighboring cell, the supported frequency band, the signal strength, or the cell ID. The host device may identify (or evaluate) whether the functionality of the remote device (e.g., the network function supported by the remote device) matches the cell information. For example, based on the capability information received in operation 1920, the host device may identify at least one neighboring cell which supports RedCap if the remote device is the RedCap device. If there is a neighboring cell which supports the functionality of the remote device, the host device may store the information of the at least one neighboring cell which supports the functionality of the remote device in a white list. For example, the host device may store the information of the at least one neighboring cell which supports RedCap in the white list. That is, the host device may add the information of the at least one neighboring cell newly identified into the stored white list. However, if no white list is stored in the host device, the host device may generate a new white list including the information of the at least one neighboring cell which supports RedCap.

In operation 1940, the host device may receive changed capability information from the remote device. If changed capability information is received from the remote device, the host device may re-evaluate at least one cell included in the candidate list based on the changed capability information. For example, if the subscription information or setting of the user is changed, the capability information of the remote device may also change. Thus, if the changed capability information includes information of the remote device which supports both RedCap and MIMO, the host device may identify whether there is a cell supporting both RedCap and MIMO in the at least one cell included in the candidate list. If the candidate list includes the cell supporting both RedCap and MIMO, the host device may update the existing white list with a white list including the information of the cell which supports both RedCap and MIMO. For example, the host device may delete information of a neighboring cell which supports only RedCap, and retain or add information of a neighboring cell which supports both RedCap and MIMO. The host device may transmit the new white list to the remote device. Hence, even if the capability information of the remote device changes, the host device may update the white list to reflect the changed capability information based on the stored candidate list.

The above host device operations are provided merely by way of example, and some of the above-described operations may be omitted, and/or one or more of them may be combined. In addition, at least one new operation may be added in addition to the operations described above and combined with the existing operations. Further, the host device operations mentioned above may further include or omit at least some of the operations explained in FIG. 5 through FIG. 12.

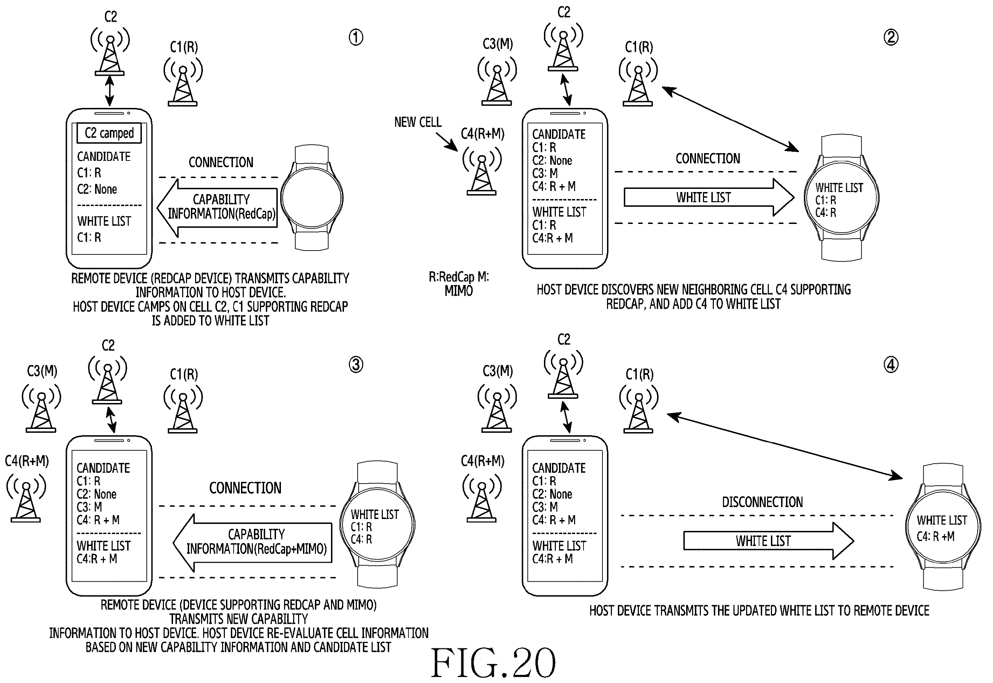

FIG. 20 illustrates an example enhanced network search method according to various embodiments of the disclosure.

Referring to FIG. 20, an embodiment in which the remote device receives from the host device the white list based on the changed capability information of the remote device, and discovers and connects to the wireless network based on the information contained in the white list, is described, according to the example operations of the host device of FIG. 19 described above.

In an embodiment, as a first step, if the host device is connected with the remote device which is a RedCap device using short-range communication, the host device connected to the cell C2 may identify whether the remote device is connected with a wireless network. For example, the host device may identify whether the remote device is connected not only with the host device using short-range communication, but also with a base station (e.g., an eNB or a gNB) over a wireless network. The host device may receive from the network (or the base station) information of at least one neighboring cell of the serving cell of the host device. The host device may store the candidate list including information of the cell C2 which is the serving cell and the neighboring cell C1 received from the network. If the remote device is not connected with a base station over a wireless network, and the signal quality of the Bluetooth connection is equal to or greater than an arbitrary threshold, the host device may receive the capability information of the remote device from the remote device. The received signal quality being equal to or greater than an arbitrary threshold is provided as an example for determining the signal quality of the Bluetooth connection, but this is only an example and, in an embodiment, the received signal strength being greater than the arbitrary threshold may be used for the determining. The capability information may include, for example, the information of whether to support at least one network function of the SUL, the RedCap, the MIMO, the 5G SA, or the 5G NSA. The capability information may further include the information of whether to support at least one of the frequency (the frequency band), the RAT, the bandwidth, the number of antennas, the modulation order, or the network function defined by 3GPP. The capability information is not limited to the above examples. The host device may add the information of the cell C1 supporting RedCap to the white list based on the capability information received from the remote device. In so doing, if there is no existing white list stored, the host device may generate a white list including the cell C1 information.

As a second step, the host device may discover a cell C3 supporting MIMO, and a new neighboring cell C4 supporting RedCap and MIMO. The host device may add information of the cell C3 supporting MIMO, and the new neighboring cell C4 supporting RedCap and MIMO to the candidate list. In addition, the host device may add information of the cell C4 supporting RedCap to the white list based on the capability information. Hence, the white list stored in the host device may include the information of cell C1 the supporting RedCap and the cell C4 supporting RedCap and MIMO. The host device may transmit the white list including the information of the cells C1 and C4 to the remote device.

As a third step, the host device may receive changed capability information from the remote device. If the changed capability information is received from the remote device, the host device may re-evaluate the cell C1 through the cell C4 included in the candidate list based on the changed capability information. Hence, if the changed capability information includes remote device information supporting both RedCap and MIMO, the host device may identify whether the cell C1 through the cell C4 in the candidate list includes a cell supporting both RedCap and MIMO. The host device may update the existing white list to include the information of the cell C4 supporting both RedCap and MIMO in the candidate list. For example, the host device may delete the information of the cell C1 supporting only RedCap from the existing stored white list, and retain the information of the cell C4 supporting both RedCap and MIMO.

As a fourth step, if the Bluetooth connection with the remote device is released, the host device may transmit the updated white list to the remote device. If the Bluetooth connection between the host device and the remote device is released, the remote device may search for a wireless network, based on the information contained in the white list received from the host device. For example, the white list received from the host device may include, for example, at least one information of the cell ID, the frequency information, the network function, or the signal strength of the cell C4 supporting RedCap and MIMO. At this time, the remote device which is a RedCap device may receive an SSB including an SS and a PBCH broadcast from the cell C4. The remote device may obtain time/frequency synchronization information of the cell C4 from the SS. In so doing, the remote device may already know the cell ID (e.g., PCI) of the cell C4 through the white list. The remote device may perform the connection operation (e.g., camp-on) on the cell C4. The remote device may decode the PBCH of the SSB received from the cell C4 and thus obtain information contained in the MIB. The remote device may identify whether the cell C4 is a blocked cell based on the information contained in the MIB. The terminal may receive the PDCCH based on the information contained in the MIB, and receive the SIB (e.g., an SIB 1) over the PDSCH, by decoding the PDCCH. The remote device may identify an PLMN of the cell C4 based on the information contained in the SIB. If the PLMN ID of the cell C4 matches the PLMN ID to which the remote device is subscribed, the remote device may select the cell C4 as its serving cell. The remote device may camp on the cell C4.

The above-described operations of the host device and the remote device are provided merely by way of example, and some of the above operations may be omitted, and/or one or more of them may be combined. In addition, at least one new operation may be added in addition to the operations described above and combined with the existing operations. Further, the operations of the host device and the remote device mentioned above may further include or omit at least some of the operations explained in FIG. 5 through FIG. 12.

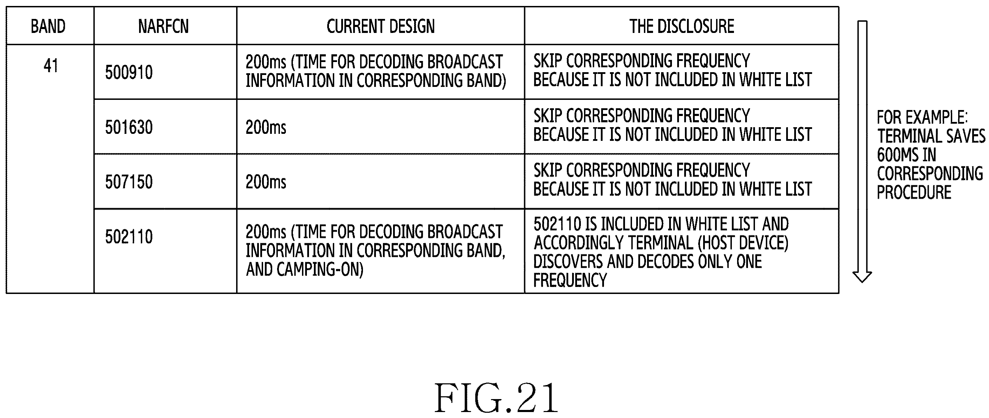

FIG. 21 illustrates an example reduced network search procedure of a remote device, according to various embodiments of the disclosure.

Referring to FIG. 21, reduced latency in a network search of the remote device may be described according to the various embodiments of the disclosure mentioned earlier. The remote device may omit search for an unnecessary cell/frequency. Accordingly, the time for the network search at the remote device may be reduced. In particular, for a RedCap device which is smaller than the host device and is limited in battery, the battery savings by the enhanced network search method of the present disclosure may be of great advantage. Further, if the remote device operates in an energy saving mode, other service provision may not be interrupted through efficient implementation of the energy saving mode by the enhanced network search method of the present disclosure. For example, if the remote device is not connected with a wireless network (e.g., if the remote device operates in the flight mode), the remote device has previously needed to search for the serving cell sequentially in all frequency bands supported by the remote device in the network search, but the discovery and the decoding may be performed only on frequencies with NR absolute radio frequency channel number (ARFCN) 5021110 of frequency band 41 according to the present disclosure. Thus, the time (e.g., 600 ms) and power required for searching and decoding other frequencies in the frequency band 41 may be saved.

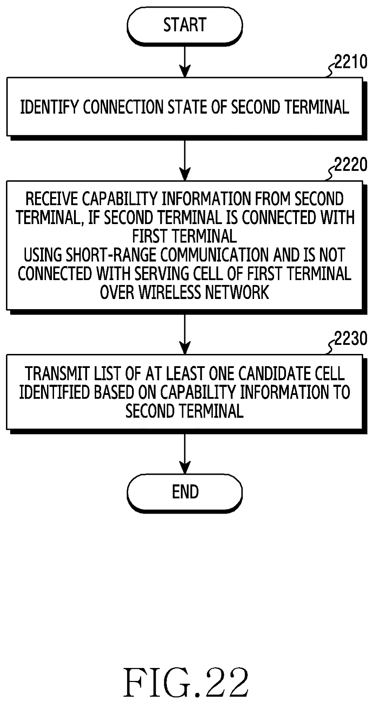

FIG. 22 illustrates example operations of a host device according to various embodiments of the disclosure.

Referring to FIG. 22, in an example network search method of a second terminal (e.g., a remote device), a flowchart of a first terminal (e.g., a host device) may be illustrated.

In operation 2210, the first terminal may identify a connection state of the second terminal. For example, the first terminal may identify whether it may communicate via a Bluetooth connection with the second terminal located at a close distance to the first terminal. If the first terminal is connected with the second terminal using short-range communication, the first terminal may identify whether the second terminal is connected to a wireless network. For example, it may identify whether the second terminal is connected not only with the first terminal using short-range communication, but also with a base station (e.g., an eNB or a gNB) over a wireless network. The first terminal may generate and transmit a white list, for example, only if the second terminal is not connected to the wireless network (e.g., in the flight mode). If the second terminal is connected to a base station and a wireless network, the first terminal may not generate a white list, or may not transmit the generated white list to the second terminal.

In operation 2220, if the second terminal is connected with the first terminal using short-range communication and not connected with a serving cell of the first terminal over a wireless network, the first terminal may receive capability information from the second terminal. The capability information may include, for example, the information of whether to support at least one network function of the SUL, the RedCap, the MIMO, the 5G SA, or the 5G NSA. The capability information may further include the information of whether to support at least one of the frequency (frequency band), the RAT, the bandwidth, the number of antennas, the modulation order, or the network function defined by 3GPP. The capability information is not limited to the above examples.

In operation 2230, the first terminal may transmit a list of at least one candidate cell (or neighboring cell) identified based on the capability information to the second terminal. For example, based on the capability information received in operation 2220, the first terminal may identify at least one candidate cell which supports RedCap if the second terminal is a RedCap device. In so doing, the information of the at least one candidate cell may be received from the network (or a base station), and the at least one candidate cell information may be included in system information (e.g., SIB) or a terminal dedicated message. Accordingly, the first terminal may decode the system information or the terminal dedicated message and thus obtain the at least one candidate cell information. The at least one candidate cell information may include at least one of a network function supported by each candidate cell, a supported frequency band, a signal strength, or a cell ID. Hence, if there is a candidate cell supporting the functionality of the second terminal, the first terminal may transmit to the second terminal the list of the at least one candidate cell which supports the functionality of the second terminal.

The above operations of the first terminal may be described based on the operations of the first terminal according to the aforementioned embodiments. In addition, at least one of the above operations of the first terminal may be omitted, and/or one or more operations may be combined. At least one operation of the above operations of the first terminal may be added and combined with other operations.

According to various embodiments of the disclosure, a method performed by a first terminal in a wireless communication system may include identifying a connection state of a second terminal, receiving capability information from the second terminal, and, if the second terminal is connected with the first terminal using short-range communication, and is not connected with a serving cell of the first terminal over a wireless network, transmitting a list of at least one candidate cell identified based on the capability information to the second terminal. The first terminal may be a host device, the second terminal may be a remote device connectable with the at least one candidate cell over the wireless network, and the list may include information of the at least one candidate cell for the wireless network connection of the second terminal, if the short-range communication connection is released.

According to an embodiment, the capability information may include information of a network function supported by the second terminal, and the network function may include at least one of SUL, RedCap, MIMO, 5G SA, or 5G NSA, and the at least one candidate cell may be a cell supporting the network function.

According to an embodiment, transmitting the list of the at least one candidate cell to the second terminal may include transmitting the list of the at least one candidate cell to the second terminal, if a quality of the short-range communication is equal to or less than an arbitrary threshold. The list of the at least one candidate cell may include at least one of a cell identifier, frequency information, a signal strength, an MCS level, a bandwidth, the number of antennas, or information of functionality supported by the cell, and the information of the functionality supported by the cell may include information relating to whether the at least one candidate cell supports the network function.

According to an embodiment, the at least one candidate cell may be included in at least one neighboring cell other than the serving cell of at least the first terminal, and the at least one neighboring cell may be discovered by the first terminal, if the short-range communication connection is released.

According to an embodiment, transmitting the list of the at least one candidate cell to the second terminal may include identifying the at least one first candidate cell based on the capability information, receiving changed capability information from the second terminal, and transmitting to the second terminal a list of the at least one first candidate cell and at least one second candidate cell identified based on the changed capability information.

According to various embodiments of the disclosure, a method performed by a second terminal in a wireless communication system may include transmitting capability information to the first terminal, if the second terminal is connected with a first terminal using short-range communication and is not connected with a serving cell of the first terminal over a wireless network, receiving a list of at least one candidate cell identified based on the capability information from the first terminal, and searching for a serving cell of the second terminal based on the list of the at least one candidate cell. The first terminal may be a host device, the second terminal may be a remote device connectable with the at least one candidate cell over the wireless network, and the list may include information of the at least one candidate cell for the wireless network connection of the second terminal, if the short-range communication connection is released.

According to an embodiment, the capability information may include information of a network function supported by the second terminal, the network function may include at least one of SUL, RedCap, MIMO, 5G SA, or 5G NSA, and the at least one candidate cell may be a cell supporting the network function.

According to an embodiment, receiving the list of the at least one candidate cell from the first terminal may include receiving the list of the at least one candidate cell from the first terminal, if a quality of the short-range communication is equal to or less than an arbitrary threshold. The list of the at least one candidate cell may include at least one of a cell identifier, frequency information, a signal strength, an MCS level, a bandwidth, the number of antennas, or information of functionality supported by the cell, and the information of the functionality supported by the cell may include information relating to whether the at least one candidate cell supports the network function.

According to an embodiment, the at least one candidate cell may be included in at least one neighboring cell other than the serving cell of at least the first terminal, and the at least one neighboring cell may be discovered by the first terminal, if the short-range communication connection is released.

According to an embodiment, receiving the list of the at least one candidate cell from the first terminal may include transmitting changed capability information to the first terminal, and receiving from the first terminal a list of at least one first candidate cell and at least one second candidate cell identified based on the changed capability information. The at least one first candidate cell may be identified based on the capability information.

According to various embodiments of the disclosure, a first terminal in a wireless communication system may include a transceiver, and at least one processor coupled with the transceiver. The at least one processor may be configured to identify a connection state of a second terminal, receive capability information from the second terminal, if the second terminal is connected with the first terminal using short-range communication, and is not connected with a serving cell of the first terminal over a wireless network, and transmit a list of at least one candidate cell identified based on the capability information to the second terminal. The first terminal may be a host device, the second terminal may be a remote device connectable with the at least one candidate cell over the wireless network, and the list may include information of the at least one candidate cell for the wireless network connection of the second terminal, if the short-range communication connection is released.

According to an embodiment, the capability information may include information of a network function supported by the second terminal, the network function may include at least one of SUL, RedCap, MIMO, 5G SA, or 5G NSA, and the at least one candidate cell may be a cell supporting the network function.

According to an embodiment, the at least one processor may be configured to transmit the list of the at least one candidate cell to the second terminal, if a quality of the short-range communication is equal to or less than an arbitrary threshold, the list of the at least one candidate cell may include at least one of a cell identifier, frequency information, a signal strength, an MCS level, a bandwidth, the number of antennas, or information of functionality supported by the cell, and the information of the functionality supported by the cell may include information relating to whether the at least one candidate cell supports the network function.

According to an embodiment, the at least one candidate cell may be included in at least one neighboring cell other than the serving cell of at least the first terminal, and the at least one neighboring cell may be discovered by the first terminal, if the short-range communication connection is released.

According to an embodiment, the at least one processor may be configured to identify at least one first candidate cell based on the capability information, receive changed capability information from the second terminal, and transmit to the second terminal a list of the at least one first candidate cell and at least one second candidate cell identified based on the changed capability information.

According to various embodiments of the disclosure, a second terminal in a wireless communication system may include a transceiver, and at least one processor coupled with the transceiver. The at least one processor may be configured to transmit capability information to the first terminal, if the second terminal is connected with the first terminal using short-range communication and is not connected with a serving cell of the first terminal over a wireless network, receive a list of at least one candidate cell identified based on the capability information from the first terminal, and search for a serving cell of the second terminal based on the list of the at least one candidate cell. The first terminal may be a host device, the second terminal may be a remote device connectable with the at least one candidate cell over the wireless network, and the list may include information of the at least one candidate cell for the wireless network connection of the second terminal, if the short-range communication connection is released.

According to an embodiment, the capability information may include information of a network function supported by the second terminal, the network function including at least one of SUL, RedCap, MIMO, 5G SA, or 5G NSA, and the at least one candidate cell may be a cell supporting the network function.

According to an embodiment, the at least one processor may be configured to receive the list of the at least one candidate cell from the first terminal, if a quality of the short-range communication is equal to or less than an arbitrary threshold, the list of the at least one candidate cell may include at least one of a cell identifier, frequency information, a signal strength, an MCS level, a bandwidth, the number of antennas, or information of functionality supported by the cell, and the information of the functionality supported by the cell may include information relating to whether the at least one candidate cell supports the network function.

According to an embodiment, the at least one candidate cell may be included in at least one neighboring cell other than the serving cell of at least the first terminal, and the at least one neighboring cell may be discovered by the first terminal, if the short-range communication connection is released.

According to an embodiment, the at least one processor may be configured to transmit changed capability information to the first terminal, and receive from the first terminal a list of at least one first candidate cell and at least one second candidate cell identified based on the changed capability information, and the at least one first candidate cell may be identified based on the capability information.

It should be noted that the above-described diagrams, the example diagrams of the control/data signal transmission method, the example diagrams of the operation procedure, and the configuration diagrams are not intended to limit the scope of the claims of the disclosure. That is, not all components, entities, or operations described in the embodiments of the disclosure are essential components for executing the disclosure, and the disclosure may be implemented by including only some components without impairing the essence of the disclosure. In addition, each of the embodiments may be operated in combination with each other as needed. For example, the network entity and the terminal may be operated by combining various methods described in the disclosure.

The operations of the base station or the terminal mentioned above may be realized by providing a memory device storing corresponding program code in a specific unit of the base station or the terminal. That is, a control unit of the base station or the terminal may carry out the aforementioned operations by reading and executing the program code stored in the memory device using a processor or a central processing unit (CPU).

Various components or modules in an entity, a base station, or a terminal described in the disclosure may operate by using a hardware circuit, for example, a complementary metal oxide semiconductor-based logic circuit, firmware and software and/or a hardware circuit such as a combination of hardware, firmware, and/or software embedded into a machine-readable medium. For example, various electrical structures and methods may be carried out by using electrical circuits such as transistors, logic gates, and application specific integrated circuit (ASICs).

As for the software, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

Such a program (software module, software) may be stored to a random access memory, a non-volatile memory including a flash memory, a ROM, an electrically erasable programmable ROM (EEPROM), a magnetic disc storage device, a CD-ROM, DVDs or other optical storage device, and a magnetic cassette. In an embodiment, it may be stored to a memory combining part or all of those recording media. In addition, a plurality of memories may be included.

Also, the program may be stored in an attachable storage device accessible via a communication network such as the internet, an intranet, a local area network (LAN), a wide LAN (WLAN), or a storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments of the disclosure, the components included in the disclosure may be expressed in a singular or plural form. However, the singular or plural expression is appropriately selected according to a proposed situation for the sake of explanation, the disclosure is not limited to a single component or a plurality of components, the components expressed in the plural form may be configured as a single component, and the components expressed in the singular form may be configured as a plurality of components.

While the particular embodiments of the disclosure have been particularly described, it will be understood by one of ordinary skill in the art that various changes in form and details may be made therein without departing from the spirit and scope of the disclosure. Hence, the scope of the disclosure is not defined by the embodiments of the disclosure but by the claims and all modifications or alternatives derived from the scope and spirit of the claims and equivalents thereof fall within the scope of the disclosure. That is, it will be recognized that various modifications may be made based on the technical scope of the disclosure. Also, the embodiments may be combined if necessary. For example, some of the methods explained in the disclosure may be combined with each other to operate the base station and the terminal. Also, although the embodiments of the disclosure are suggested based on the 5G and NR systems, other modifications based on the technical ideas of the embodiments of the disclosure may be applied to other communication systems such as LTE, LTE-A, and LTE-A-Pro systems.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A method performed by a first terminal in a wireless communication system, the method comprising:
identifying a connection state of a second terminal; and
based on the second terminal being connected with the first terminal using short-range communication and the second terminal not being connected to a service cell of the first terminal over a wireless network,
receiving capability information from the second terminal; and
transmitting a list of at least one candidate cell identified based on the capability information to the second terminal,
wherein the first terminal is a host device, and the second terminal is a remote device connectable with the at least one candidate cell over the wireless network, and
wherein the list includes information of the at least one candidate cell for wireless network connection of the second terminal, based on the short-range communication connection being released.

2. The method of claim 1, wherein the capability information comprises information of a network function supported by the second terminal,
wherein the network function includes at least one of supplementary uplink (SUL), reduced capability (RedCap), multiple-input and multiple-output (MIMO), 5th generation (5G) standalone (SA), or 5G non-standalone (NSA), and
wherein the at least one candidate cell is a cell supporting the network function.

3. The method of claim 2, wherein transmitting the list of the at least one candidate cell to the second terminal comprises:
transmitting the list of the at least one candidate cell to the second terminal, based on a quality of the short-range communication being equal to or less than a threshold,
wherein the list of the at least one candidate cell includes at least one of a cell identifier, frequency information, a signal strength, a modulation and coding scheme (MCS) level, a bandwidth, a number of antennas, or information of functionality supported by the cell, and
wherein the information of the functionality supported by the cell includes information on whether the at least one candidate cell supports the network function.

4. The method of claim 2, wherein the at least one candidate cell is included in at least one neighboring cell other than the serving cell of at least the first terminal, and
wherein the at least one neighboring cell is discovered by the first terminal, based on the short-range communication connection being released.

5. A method performed by a second terminal in a wireless communication system, the method comprising:
based on the second terminal being connected to a first terminal using short-range communication and the second terminal not being connected with a serving cell of the first terminal over a wireless network,
transmitting capability information to the first terminal;
receiving a list of at least one candidate cell identified based on the capability information from the first terminal; and
searching for a serving cell of the second terminal based on the list of the at least one candidate cell,
wherein the first terminal is a host device, and the second terminal is a remote device connectable with the at least one candidate cell over the wireless network, and
wherein the list includes information of the at least one candidate cell for wireless network connection of the second terminal, based on the short-range communication connection being released.

6. The method of claim 5, wherein the capability information includes information of a network function supported by the second terminal,
wherein the network function including at least one of supplementary uplink (SUL), reduced capability (RedCap), multiple-input and multiple-output (MIMO), 5th generation (5G) standalone (SA), or 5G non-standalone (NSA), and
wherein the at least one candidate cell is a cell supporting the network function.

7. The method of claim 6, wherein receiving the list of the at least one candidate cell from the first terminal comprises:
receiving the list of the at least one candidate cell from the first terminal, based on a quality of the short-range communication being equal to or less than a threshold,
wherein the list of the at least one candidate cell includes at least one of a cell identifier, frequency information, a signal strength, a modulation and coding scheme (MCS) level, a bandwidth, a number of antennas, or information of functionality supported by the cell, and
wherein the information of the functionality supported by the cell includes information on whether the at least one candidate cell supports the network function.

8. The method of claim 6, wherein the at least one candidate cell is included in at least one neighboring cell other than the serving cell of at least the first terminal, and
wherein the at least one neighboring cell is discovered by the first terminal, based on the short-range communication connection being released.

9. A first terminal in a wireless communication system, the first terminal comprising:
a transceiver; and
at least one processor coupled with the transceiver and configured to:
identify a connection state of a second terminal,
based on the second terminal being connected with the first terminal using short-range communication and the second terminal not being connected with a serving cell of the first terminal over a wireless network,
receive capability information from the second terminal, and
transmit a list of at least one candidate cell identified based on the capability information to the second terminal,
wherein the first terminal is a host device, and the second terminal is a remote device connectable with the at least one candidate cell over the wireless network, and
wherein the list includes information of the at least one candidate cell for wireless network connection of the second terminal, based on the short-range communication connection being released.

10. The first terminal of claim 9, wherein the capability information includes information of a network function supported by the second terminal,
wherein the network function including at least one of supplementary uplink (SUL), reduced capability (RedCap), multiple-input and multiple-output (MIMO), 5th generation (5G) standalone (SA), or 5G non-standalone (NSA), and
wherein the at least one candidate cell is a cell supporting the network function.

11. The first terminal of claim 10, wherein at least one processor is configured to:
transmit the list of the at least one candidate cell to the second terminal, based on a quality of the short-range communication being equal to or less than a threshold,
wherein the list of the at least one candidate cell includes at least one of a cell identifier, frequency information, a signal strength, a modulation and coding scheme (MCS) level, a bandwidth, a number of antennas, or information of functionality supported by the cell, and
wherein the information of the functionality supported by the cell includes information on whether the at least one candidate cell supports the network function.

12. The first terminal of claim 10, wherein the at least one candidate cell is included in at least one neighboring cell other than the serving cell of at least the first terminal, and
wherein the at least one neighboring cell is discovered by the first terminal, based on the short-range communication connection being released.

13. A second terminal in a wireless communication system, the second terminal comprising:
a transceiver; and
at least one processor coupled with the transceiver and configured to:
based on the second terminal being connected with a first terminal using short-range communication and the second terminal not being connected with a serving cell of the first terminal over a wireless network,
transmit capability information to the first terminal,
receive a list of at least one candidate cell identified based on the capability information from the first terminal, and
search for a serving cell of the second terminal based on the list of the at least one candidate cell,
wherein the first terminal is a host device, and the second terminal is a remote device connectable with the at least one candidate cell over the wireless network, and
wherein the list includes information of the at least one candidate cell for wireless network connection of the second terminal, based on the short-range communication connection being released.

14. The second terminal of claim 13, wherein the capability information includes information of a network function supported by the second terminal,
wherein the network function including at least one of supplementary uplink (SUL), reduced capability (RedCap), multiple-input and multiple-output (MIMO), 5th generation (5G) standalone (SA), or 5G non-standalone (NSA), and
wherein the at least one candidate cell is a cell supporting the network function.

15. The second terminal of claim 14, wherein at least one processor is configured to:
receive the list of the at least one candidate cell from the first terminal, based on a quality of the short-range communication being equal to or less than a threshold,
wherein the list of the at least one candidate cell includes at least one of a cell identifier, frequency information, a signal strength, a modulation and coding scheme (MCS) level, a bandwidth, a number of antennas, or information of functionality supported by the cell, and
wherein the information of the functionality supported by the cell includes information on whether the at least one candidate cell supports the network function.
